# EUROPEAN PATENT APPLICATION

(11) **EP 4 732 718 A1**
(43) Date of publication of application: **29.04.2026**
(21) Application number: 25209714.2
(22) Date of filing: 20.10.2025
(51) Int. Cl.: A47C 27/08, D03D 1/02

(54) **INFLATABLE PRODUCT, METHOD FOR MANUFACTURING INFLATABLE PRODUCT, AND METHOD FOR MANUFACTURING TENSIONING ASSEMBLY**

(30) Priority: 25.10.2024 CN 202411505377
(71) Applicant: Bestway Inflatables & Material Corp., Shanghai 201812 (CN)
(72) Inventor: ZENG, Xianglin, Shanghai (CN); LIU, Chenggen, Shanghai (CN)
(74) Representative: Inchingalo, Simona

(57) **Abstract**

An inflatable product (10) includes opposing first and second walls and a plurality of tensioning assemblies (400). Each of the plurality of tensioning assemblies (400) includes a plurality of tensioning members (410) and a plurality of connecting members (430), and the connecting member (430) are welded to the first wall (110) and sewn to the plurality of tensioning members (410). Each of the plurality of connecting members (430) includes a connecting strip (431), a plurality of strands (433) and a first high polymer material, and the first high-polymer material secures a plurality of fibers (4331) of each strand (433) to the connecting strip (431).

## Description

### TECHNICAL FIELD

The present disclosure relates to inflatable products, and more particularly, to an inflatable product with a tensioning assembly, a method for manufacturing the inflatable product, and to a method for manufacturing a tensioning assembly of the inflatable product.

### BACKGROUND

With the development of material technologies and the increase of social demands, use of various portable devices is becoming increasingly common. For example, portable inflatable products are often light in weight and easy to package and store, which may allow inflatable devices designed for indoor use to be easily moved to the outdoors as well.

Most inflatable products have predetermined shapes determined based on the configuration of their internal structures, such that, after being inflated, the products assume their predetermined final shapes under the action of internal air-pressure. For example, tensioning structures may be arranged in an inflatable chamber of an inflatable product, and the tensioning structures may be connected to an inner wall of the inflatable chamber so that the inflatable product assumes a desired shape after being pressurized.

However, inflatable products that include inflatable chambers which utilize high air pressure to inflate may strain the connection between the tensioning members and the inner walls of the inflatable chamber. Accordingly, a need exists for an inflatable structure that includes tensioning structures having a high tensile strength and a reliable connection to the inner walls of the inflatable chamber.

### SUMMARY

The present disclosure provides an inflatable product, which features improved tensioning members and an installation method therefor.

According to an aspect of the present disclosure, an inflatable product comprises: a first wall; a second wall arranged opposite the first wall and defining an inflatable chamber together with the first wall; and a plurality of tensioning assemblies disposed within the inflatable chamber, each tensioning assembly comprising: a tensioning member comprising a woven fabric; and a first connecting member welded to the first wall and sewn to the tensioning member, the first connecting member comprising: a first connecting strip having a first surface facing the first wall and a second surface facing the tensioning member; a plurality of first strands, parallel to each other, disposed on the first surface of the first connecting strip, each first strand comprising a plurality of strands of first fibers; and a first high-polymer material securing the plurality of strands of first fibers to the first connecting strip.

In some embodiments, the plurality of strands of first fibers are twisted.

In some embodiments, the first high-polymer material comprises a cross-linking agent that matches a material used to make the plurality of strands of fibers.

In some embodiments, the plurality of strands of fibers are made of a polyester fiber, and the cross-linking agent is a polymer of 1,3-diisocyanato-2-methylbenzene and 2,4-diisocyanato-1-methylbenzene.

In some embodiments, the first wall and the second wall of the inflatable product are made of polyvinyl chloride; and the first high-polymer material further comprises polyvinyl chloride, which is obtained by curing a polyvinyl chloride paste resin.

In some embodiments, the first high-polymer material also covers a portion of the first surface of the first connecting strip, the portion being not covered by the plurality of first strands.

In some embodiments, each of the tensioning members comprises a plurality of first coated strands, each first coated strand comprising a first strand and the first high-polymer material, and the first high-polymer material wrapping the plurality of strands of first fibers of each first strand; and each of the first connecting members also comprises a layer of a second high-polymer material, the second high-polymer material covering a portion of the first surface of the first connecting strip, the portion being not covered by the plurality of first coated strands, and securing the plurality of first coated strands between the first surface of the first connecting strip and the second high-polymer material.

In some embodiments, the second high-polymer material has the same composition as the first high-polymer material.

In some embodiments, the second high-polymer material has a different composition than the first high-polymer material.

In some embodiments, each of the first connecting members comprises a plurality of first coated strands, each first coated strand comprising a first strand and the first high-polymer material, and the first high-polymer material wrapping the plurality of strands of first fibers of each first strand; each of the first connecting members further comprises: a layer of a second high-polymer material; and a layer of a third high-polymer material located between the first coated strands and the first surface of the first connecting strip; wherein the second high-polymer material covers a portion of the third high-polymer material not covered by the plurality of first coated strands, and the plurality of first coated strands are sandwiched between the second high-polymer material and the third high-polymer material.

In some embodiments, the second high-polymer material has the same composition as the first high-polymer material.

In some embodiments, the second high-polymer material has a different composition than the first high-polymer material.

In some embodiments, the third high-polymer material has the same composition as the first high-polymer material.

In some embodiments, the third high-polymer material has a different composition than the first high-polymer material.

In some embodiments, the inflatable product is an inflatable pool.

In some embodiments, each of the tensioning assemblies further comprises: a second connecting member welded to the second wall and sewn to the tensioning member, the second connecting member comprising: a second connecting strip having a first surface facing the second wall and a second surface facing the tensioning member; a plurality of second strands, parallel to each other, disposed on the first surface of the second connecting strip, each second strand comprising a plurality of strands of second fibers; and a first high-polymer material securing the plurality of strands of second fibers to the second connecting strip.

In some embodiments, the plurality of strands of second fibers are twisted.

In some embodiments, the first high-polymer material further covers a portion of the first surface of the second connecting strip, the portion being not covered by the plurality of second strands.

In some embodiments, each of the second connecting members comprises a plurality of second coated strands, each second coated strand comprising a second strand and the first high-polymer material, and the first high-polymer material wrapping the plurality of strands of second fibers of each second strand; and each of the second connecting members further comprises a layer of a second high-polymer material, the second high-polymer material covering a portion of the first surface of the second connecting strip, the portion being not covered by the plurality of second coated strands, and securing the plurality of second coated strands between the first surface of the second connecting strip and the second high-polymer material.

In some embodiments, each of the second connecting members comprises a plurality of second coated strands, each second coated strand comprising a second strand and the first high-polymer material, and the first high-polymer material wrapping the plurality of strands of second fibers of each second strand; and each of the second connecting members further comprises: a layer of a second high-polymer material; and a layer of a third high-polymer material located between the second coated strands and the first surface of the second connecting strip; wherein the second high-polymer material covers a portion of the third high-polymer material not covered by the plurality of second coated strands, and the plurality of second coated strands are sandwiched between the second high-polymer material and the third high-polymer material.

According to a further aspect of the present disclosure, a method for manufacturing an inflatable product is disclosed, the method comprising the following steps: preparing a first wall and a second wall of an inflatable product; preparing a tensioning member comprising a woven fabric; securing a plurality of strands to a plurality of sheet materials by a first high-polymer material to obtain a plurality of connecting sheets, each strand comprising a plurality of strands of fibers, and the first high-polymer material wrapping the plurality of strands of fibers of each strand; cutting each of the connecting sheets to obtain a plurality of first connecting members and a plurality of second connecting members, each of the first connecting members comprising a first connecting strip, and each of the second connecting members comprising a second connecting strip; sewing the tensioning member to at least one of the first connecting members, wherein the first connecting strip is located between the plurality of first strands and the tensioning member; sewing the tensioning member to at least one of the second connecting members, wherein the second connecting strip is located between the plurality of second strands and the tensioning member; welding the first wall to the first connecting member, wherein the plurality of first strands are located between the first wall and the first connecting strip; and welding the second wall to the second connecting member, wherein the plurality of second strands are located between the second wall and the second connecting strip.

In some embodiments, the step of securing a plurality of strands to a plurality of sheet materials by a first high-polymer material to obtain a plurality of connecting sheets comprises: securing a plurality of strands to each of a plurality of sheet materials by a first high-polymer material to obtain a plurality of connecting sheets, each strand comprising a plurality of strands of fibers, and the first high-polymer material wrapping the plurality of strands of fibers of each strand.

In some embodiments, the step of securing a plurality of strands to a plurality of sheet materials by a first high-polymer material to obtain a plurality of connecting sheets comprises: heating one of the sheet materials to soften the sheet material; placing a plurality of strands on a first surface of the softened sheet material, each strand comprising a plurality of strands of fibers; pressing the plurality of strands and the first surface of the sheet material; coating a first mixture on the first surface of the sheet material to allow the first mixture to penetrate between the plurality of strands of fibers of each strand, and between the plurality of strands and the sheet material; and heating the first mixture to cure the first mixture to produce a first high-polymer material.

In some embodiments, the step of securing a plurality of strands to a plurality of sheet materials by a first high-polymer material to obtain a plurality of connecting sheets comprises: immersing a plurality of strands into a first mixture to allow the first mixture to penetrate between the plurality of strands of fibers of each strand; heating the first mixture to cure the first mixture to produce a first high-polymer material, thereby resulting in a plurality of coated strands; heating a sheet material to soften the sheet material; placing the plurality of coated strands on a first surface of the softened sheet material; and pressing the plurality of coated strands and the first surface of the sheet material to bond the plurality of coated strands and the sheet material.

In some embodiments, the step of securing a plurality of strands to a plurality of sheet materials by a first high-polymer material to obtain a plurality of connecting sheets comprises: coating a first mixture on a first surface of a sheet material; heating the first mixture to cure the first mixture to produce a first high-polymer material, thereby forming a first high-polymer material layer on the first surface of the sheet material; heating the sheet material and the first high-polymer material layer to soften them; placing a plurality of strands on a surface of the softened first high-polymer material layer; and pressing the plurality of strands and the first high-polymer material layer, such that the first high-polymer material penetrates between the plurality of strands of fibers of each of the strands.

In some embodiments, the step of securing a plurality of strands to a plurality of sheet materials by a first high-polymer material to obtain a plurality of connecting sheets comprises: immersing a plurality of strands into a first mixture to allow the first mixture to penetrate between the plurality of strands of fibers of each strand; heating the first mixture to cure the first mixture to produce a first high-polymer material, thereby resulting in a plurality of coated strands; heating a sheet material to soften the sheet material; placing the plurality of coated strands on a first surface of the softened sheet material; pressing the plurality of coated strands and the first surface of the sheet material; coating a continuous second mixture on the first surface of the sheet material and the plurality of coated strands; and heating the second mixture to cure the second mixture to produce a second high-polymer material.

In some embodiments, the step of securing a plurality of strands to a plurality of sheet materials by a first high-polymer material to obtain a plurality of connecting sheets comprises: coating a third mixture on a first surface of a sheet material; heating the third mixture to cure the third mixture to produce a third high-polymer material, thereby forming a third high-polymer material layer on the first surface of the sheet material; immersing the plurality of strands into a first mixture to allow the first mixture to penetrate between the plurality of strands of fibers of each strand; heating the first mixture to cure the first mixture to produce a first high-polymer material, thereby resulting in a plurality of coated strands; heating the third high-polymer material layer to soften same; placing the plurality of coated strands on a surface of the softened third high-polymer material layer; pressing the plurality of coated strands and the third high-polymer material layer; coating a continuous second mixture on the surface of the third high-polymer material layer and the plurality of coated strands; and heating the second mixture to cure the second mixture to produce a second high-polymer material.

In some embodiments, the step of securing a plurality of strands to a plurality of sheet materials by a first high-polymer material to obtain a plurality of connecting sheets comprises: twisting a plurality of strands of fibers of each of a plurality of strands; securing the plurality of strands to a plurality of sheet materials by a first high-polymer material to obtain a plurality of connecting sheets, wherein the plurality of strands of fibers of each strand are twisted.

According to a further aspect of the present disclosure, a method for manufacturing a tensioning assembly of an inflatable product is disclosed, the method comprising the following steps: preparing a tensioning member comprising a woven fabric; securing a plurality of strands to a plurality of sheet materials by a first high-polymer material to obtain a plurality of connecting sheets, each strand comprising a plurality of strands of fibers, and the first high-polymer material wrapping the plurality of strands of fibers of each strand; cutting each of the connecting sheets to obtain a plurality of first connecting members and a plurality of second connecting members, each of the first connecting members comprising a first connecting strip, and each of the second connecting members comprising a second connecting strip; sewing the tensioning member to at least one of the first connecting members, wherein the first connecting strip is located between the plurality of first strands and the tensioning member; and sewing the tensioning member to at least one of the second connecting members, wherein the second connecting strip is located between the plurality of second strands and the tensioning member.

In view of the foregoing, it should be appreciated that the inflatable product described in the present disclosure employs an improved tensioning member and an installation method for the tensioning member to provide a reliable connection between the tensioning member and an inner wall of the inflatable chamber.

### BRIEF DESCRIPTION OF THE DRAWINGS

Other features and advantages of the present disclosure will be understood from the following embodiments described in detail herein and with reference to the accompanying drawings, in which like reference numerals represent the same or similar components.
FIG. 1A illustrates a schematic structure of an inflatable pool, according to one or more embodiments shown and described herein;
FIG. 1B illustrates a schematic structure a tensioning assembly of an inflatable pool, according to one or more embodiments shown and described herein;
FIG. 1C illustrates a schematic structure of an inflatable mattress, according to one or more embodiments shown and described herein;
FIG. 1D illustrates a schematic structure of a stand-up paddle board, according to one or more embodiments shown and described herein;
FIG. 1E illustrates a schematic structure of a stand-up paddle board, according to one or more embodiments shown and described herein;
FIG. 2A illustrates a tensioning assembly of an inflatable pool, according to one or more embodiments shown and described herein;
FIG. 2B illustrates a tensioning member of an inflatable pool, according to one or more embodiments shown and described herein;
FIG. 2C illustrates a connecting member of an inflatable pool, according to one or more embodiments shown and described herein;
FIG. 2D illustrates a tensioning assembly of an inflatable pool, according to one or more embodiments shown and described herein;
FIG. 2E illustrates a connecting member of an inflatable pool, according to one or more embodiments shown and described herein;
FIG. 3A illustrates a plurality of strands for forming a tensioning member, according to one or more embodiments shown and described herein;
FIG. 3B illustrates a plurality of strands wrapped by a high-polymer material, according to one or more embodiments shown and described herein;

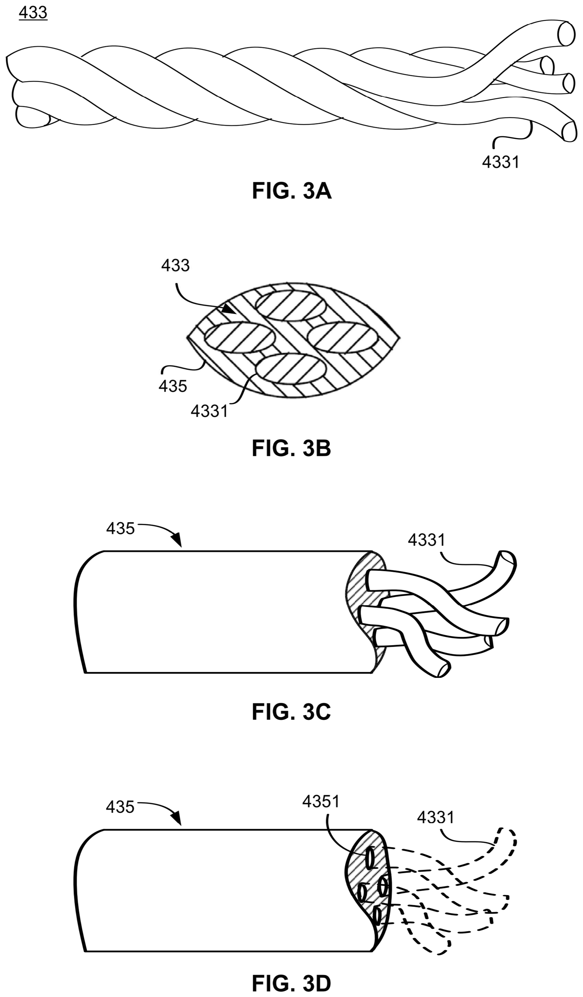

FIG. 3B illustrates a plurality of strands wrapped by a high-polymer material, according to one or more embodiments shown and described herein;
FIG. 3C illustrates a plurality of strands wrapped by a high-polymer material, according to one or more embodiments shown and described herein;
FIG. 3D illustrate a plurality of strands wrapped by a high-polymer material, according to one or more embodiments shown and described herein

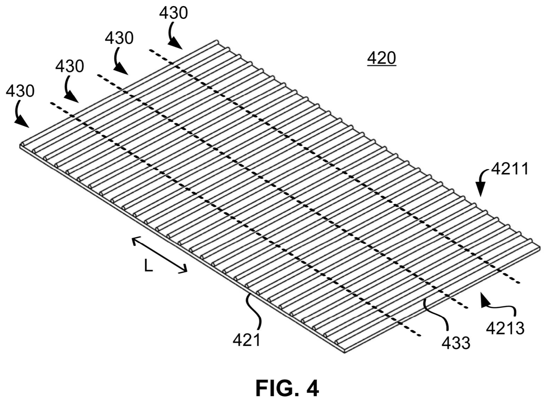

FIG. 4 illustrates a connecting sheet according, according to one or more embodiments shown and described herein

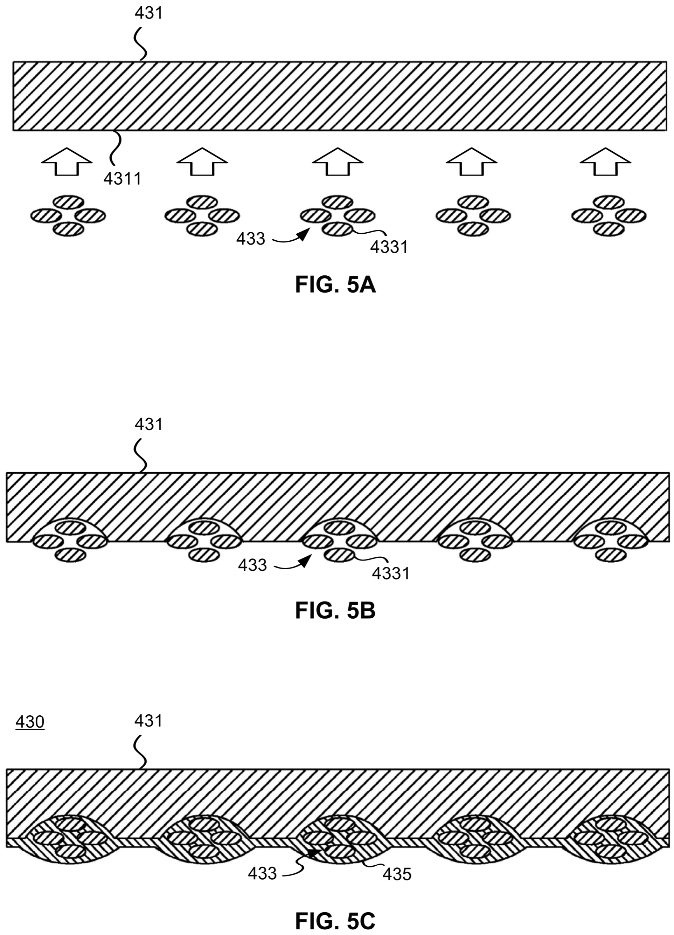

FIG. 5A illustrates a manufacturing process of a connecting sheet, according to one or more embodiments shown and described herein;
FIG. 5B illustrates a manufacturing process of a connecting sheet, according to one or more embodiments shown and described herein;
FIG. 5C illustrates a manufacturing process of a connecting sheet, according to one or more embodiments shown and described herein;

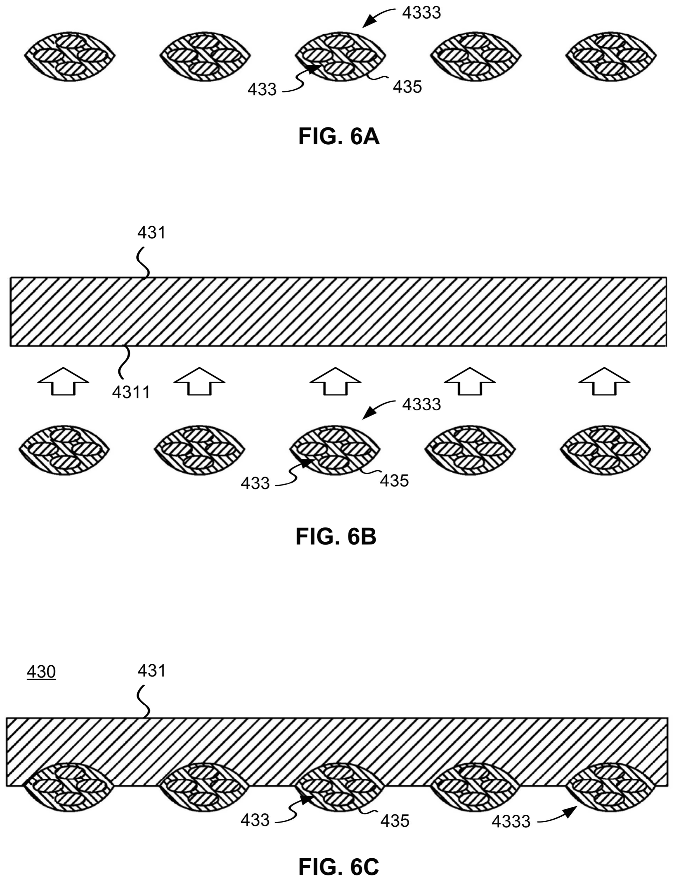

FIG. 6A illustrates a manufacturing process of a connecting sheet, according to one or more embodiments shown and described herein;
FIG. 6B illustrates a manufacturing process of a connecting sheet, according to one or more embodiments shown and described herein;
FIG. 6C illustrates a manufacturing process of a connecting sheet, according to one or more embodiments shown and described herein;

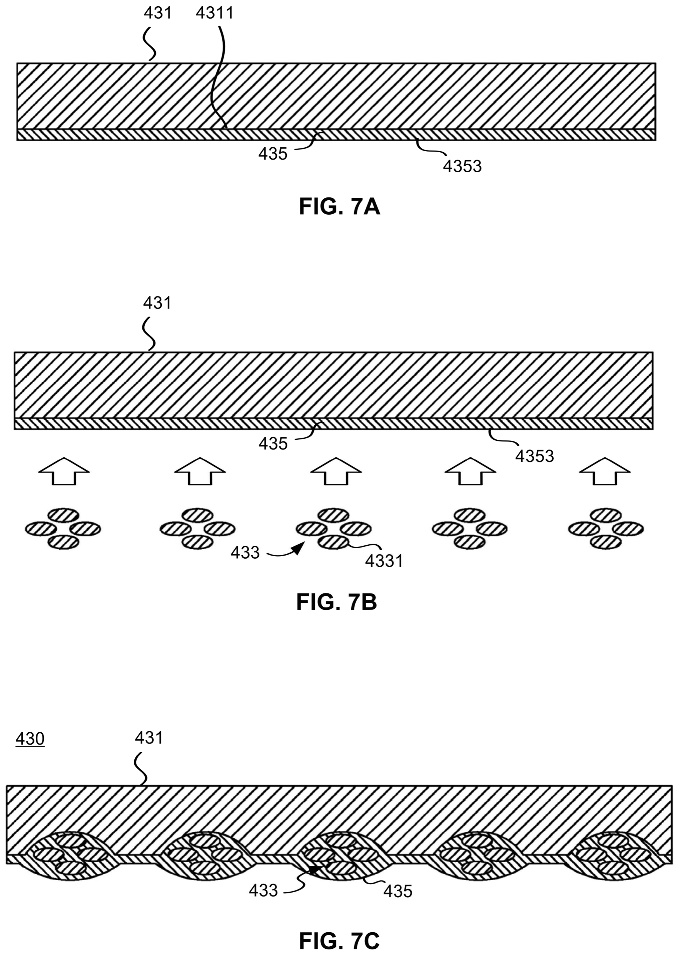

FIG. 7A illustrates a manufacturing process of a connecting sheet, according to one or more embodiments shown and described herein embodiment;
FIG. 7B illustrates a manufacturing process of a connecting sheet, according to one or more embodiments shown and described herein embodiment;
FIG. 7C illustrates a manufacturing process of a connecting sheet, according to one or more embodiments shown and described herein embodiment;

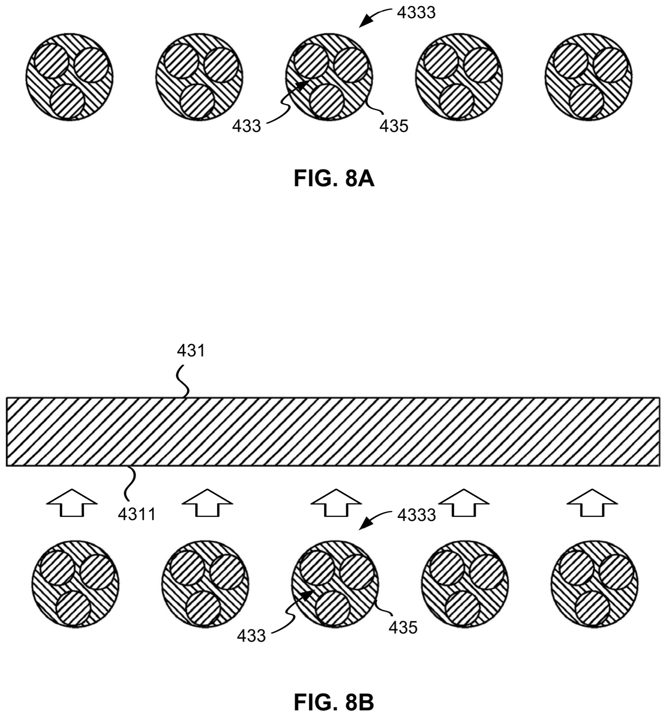

FIG. 8A illustrates a manufacturing process of a connecting sheet, according to one or more embodiments shown and described herein;
FIG. 8B illustrates a manufacturing process of a connecting sheet, according to one or more embodiments shown and described herein;

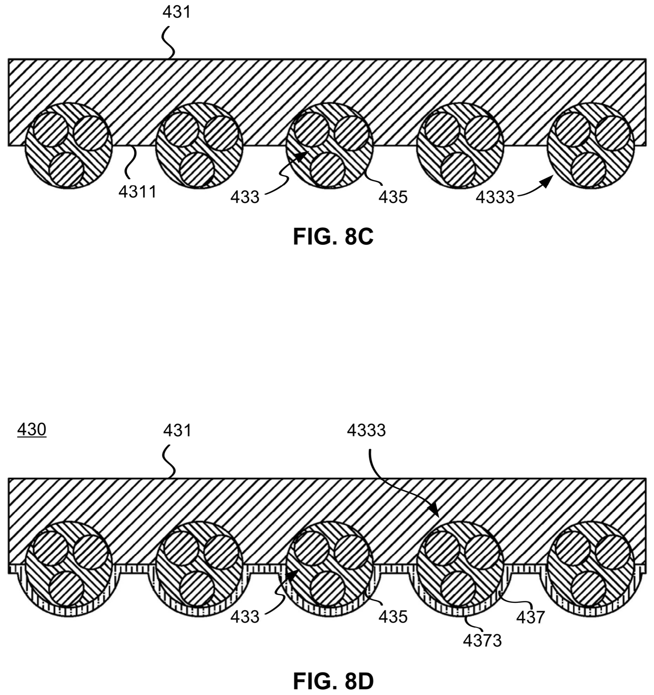

FIG. 8C illustrates a manufacturing process of a connecting sheet, according to one or more embodiments shown and described herein;
FIG. 8D illustrates a manufacturing process of a connecting sheet, according to one or more embodiments shown and described herein;

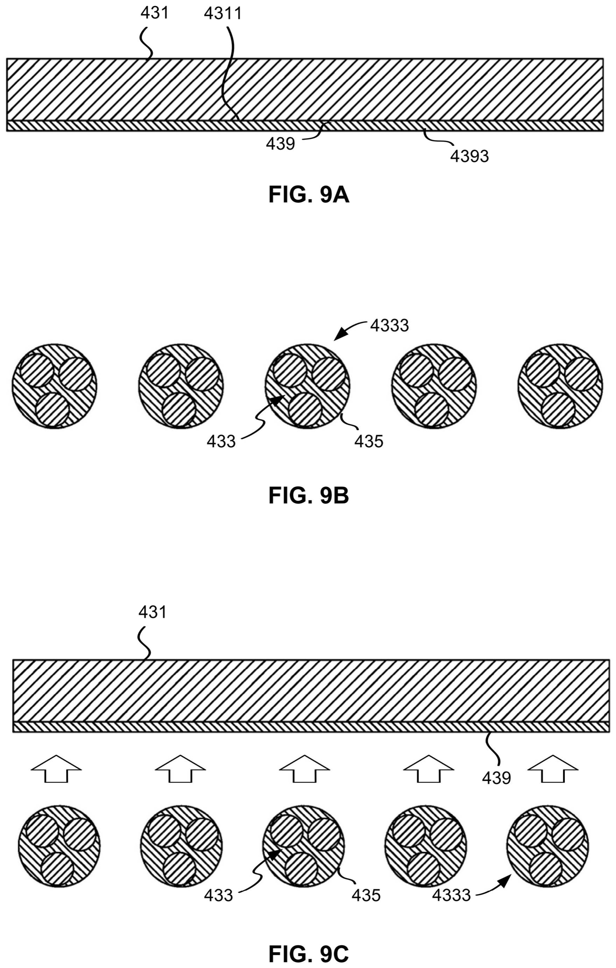

FIG. 9A illustrates a manufacturing process of a connecting sheet, according to one or more embodiments shown and described herein;
FIG. 9B illustrates a manufacturing process of a connecting sheet, according to one or more embodiments shown and described herein;
FIG. 9C illustrates a manufacturing process of a connecting sheet, according to one or more embodiments shown and described herein;

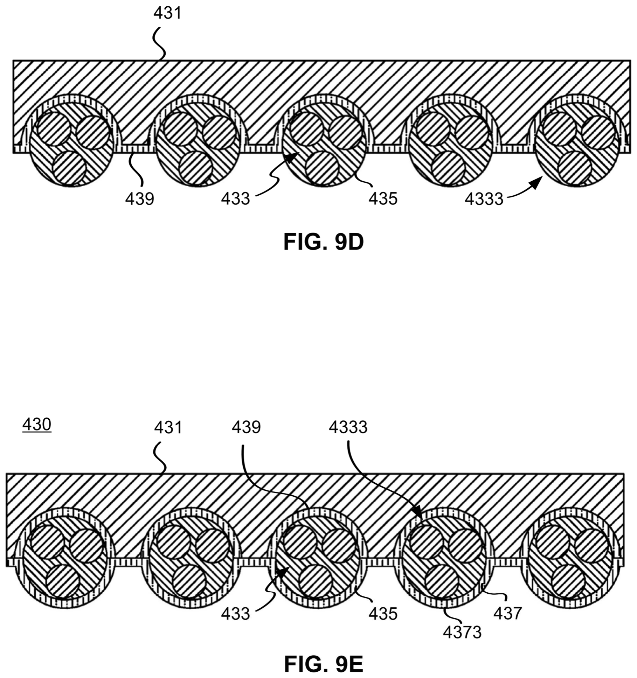

FIG. 9D illustrates a manufacturing process of a connecting sheet, according to one or more embodiments shown and described herein;
FIG. 9E illustrates a manufacturing process of a connecting sheet, according to one or more embodiments shown and described herein;

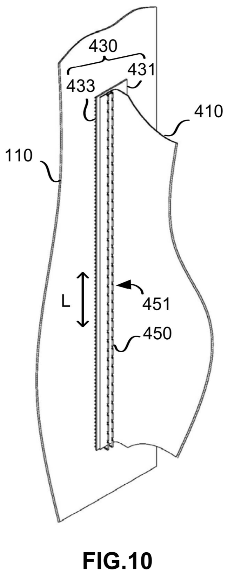

FIG. 10 illustrates a tensioning assembly of an inflatable pool, according to one or more embodiments shown and described herein;

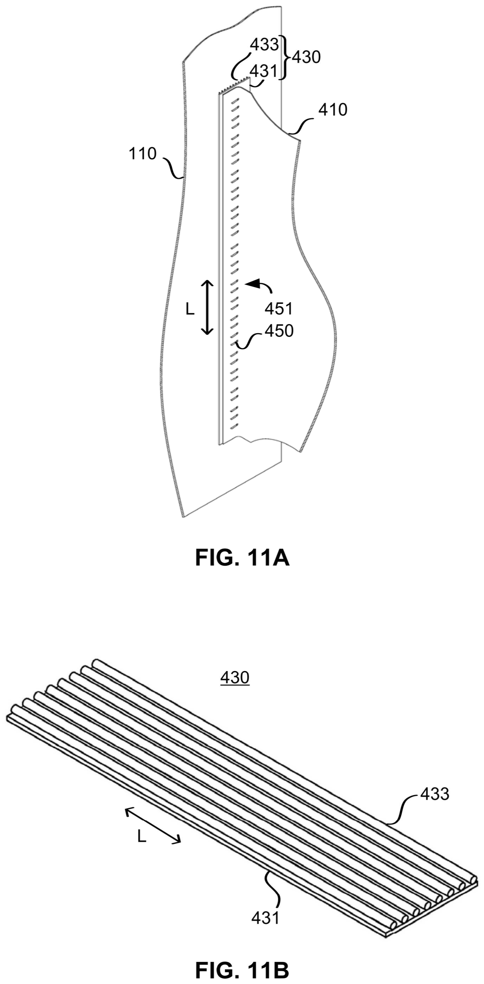

FIG. 11A illustrates a tensioning assembly of an inflatable pool, according to one or more embodiments shown and described herein;
FIG. 11B illustrates a connecting member of an inflatable pool, according to one or more embodiments shown and described herein;

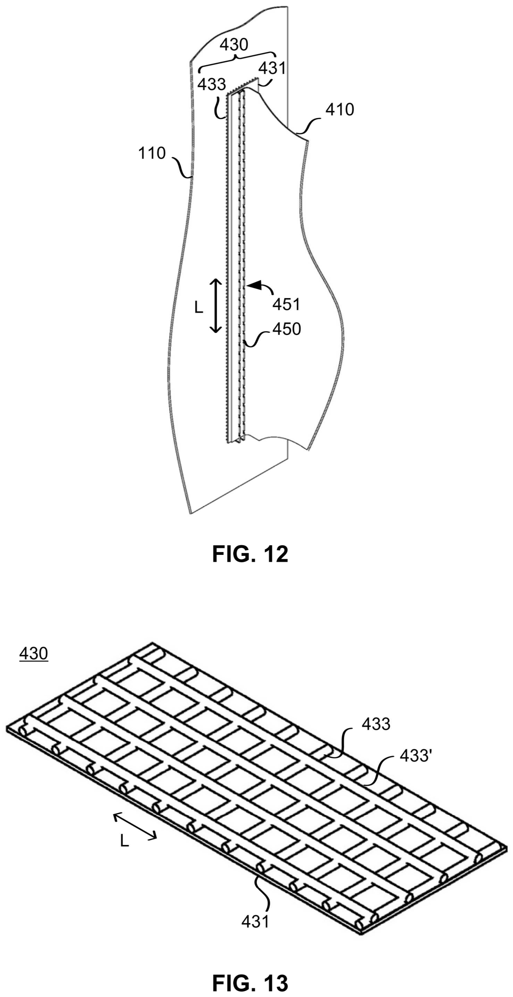

FIG. 12 illustrates a tensioning assembly of an inflatable pool, according to one or more embodiments shown and described herein;
FIG. 13 illustrates a connecting member of an inflatable pool, according to one or more embodiments shown and described herein;

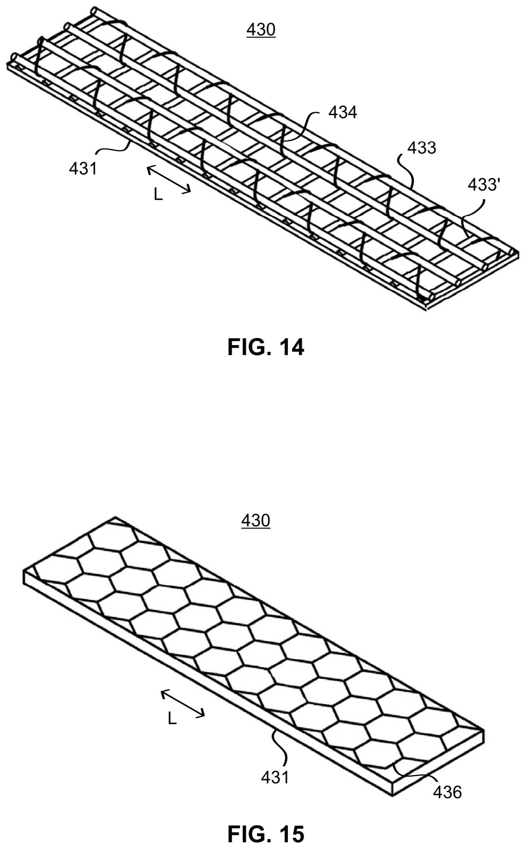

FIG. 14 illustrates a connecting member of an inflatable pool, according to one or more embodiments shown and described herein;
FIG. 15 illustrates a connecting member of an inflatable pool, according to one or more embodiments shown and described herein;

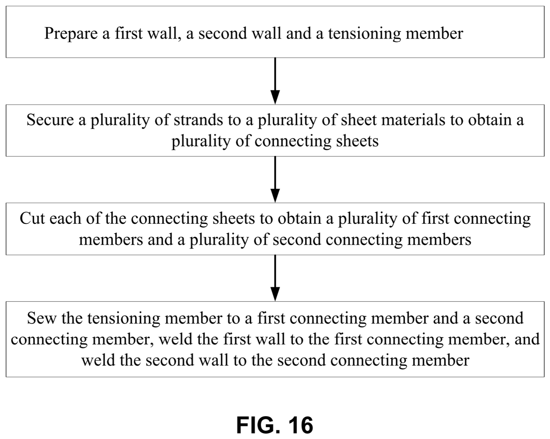

FIG. 16 illustrates the manufacturing steps of parts of an inflatable product, according to one or more embodiments shown and described herein;

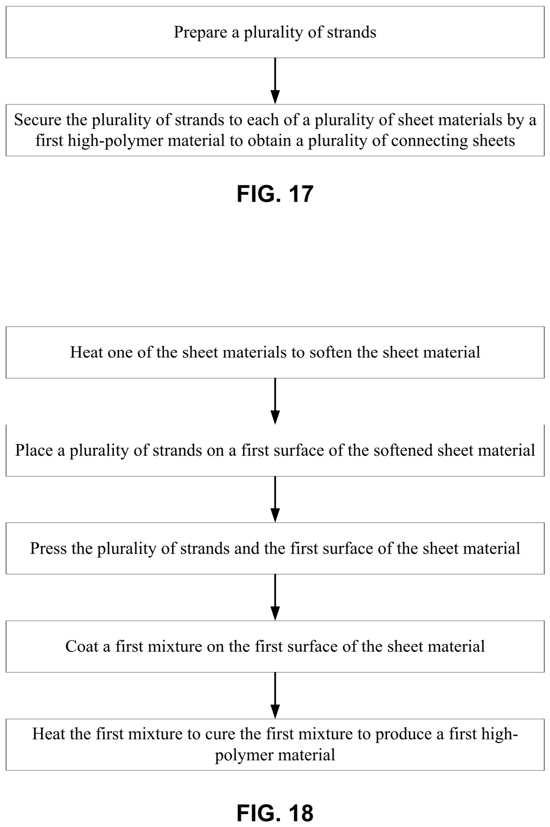

FIG. 17 illustrates the manufacturing steps of a connecting sheet, according to one or more embodiments shown and described herein;
FIG. 18 illustrates the manufacturing steps of a connecting sheet, according to one or more embodiments shown and described herein;

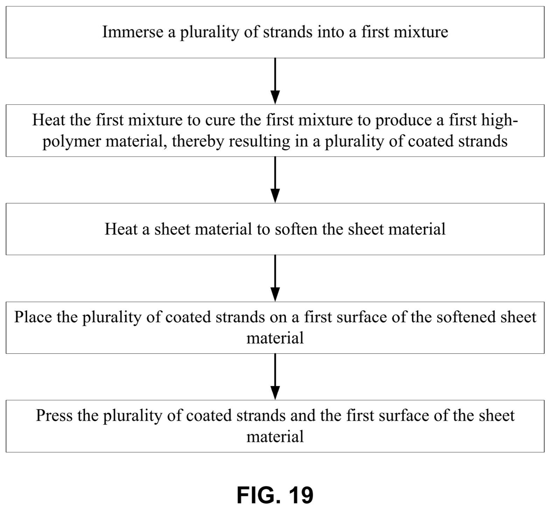

FIG. 19 illustrates the manufacturing steps of a connecting sheet, according to one or more embodiments shown and described herein;

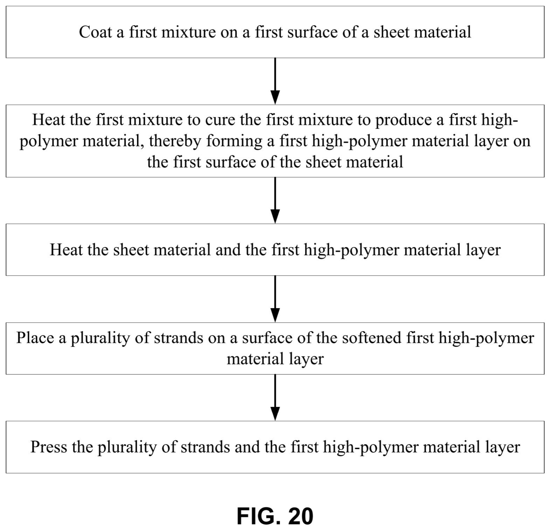

FIG. 20 illustrates the manufacturing steps of a connecting sheet, according to one or more embodiments shown and described herein;

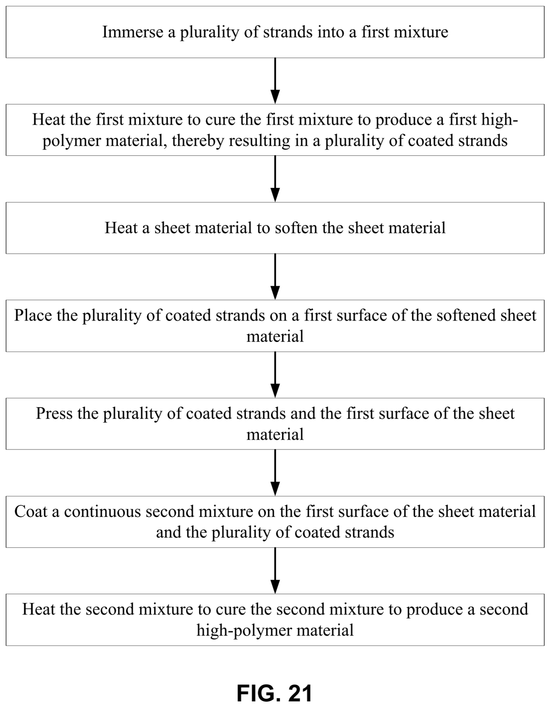

FIG. 21 illustrates the manufacturing steps of a connecting sheet, according to one or more embodiments shown and described herein;

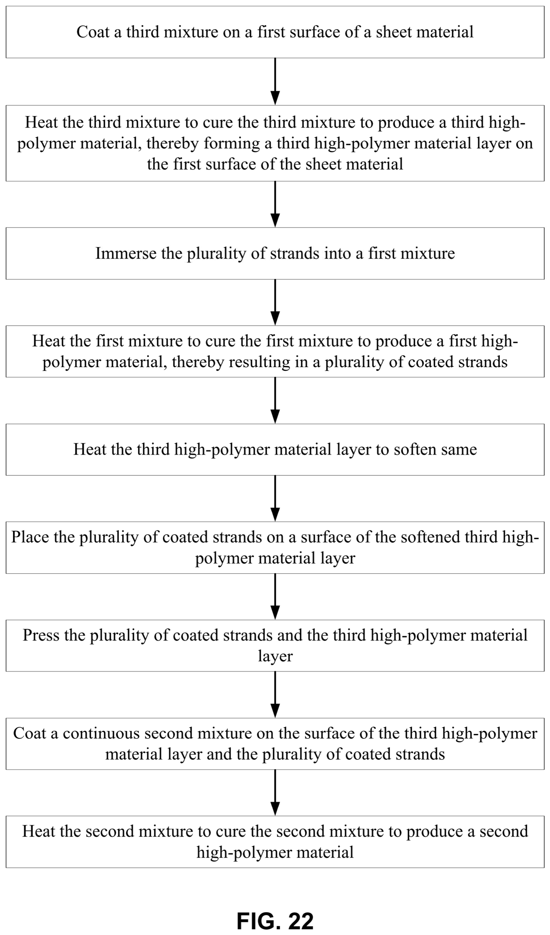

FIG. 22 illustrates the manufacturing steps of a connecting sheet, according to one or more embodiments shown and described herein; and

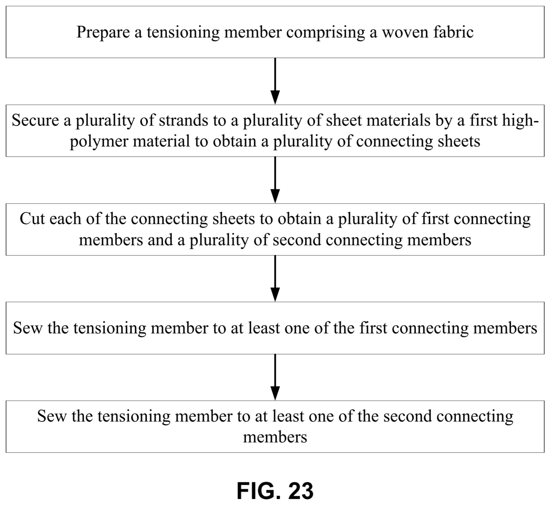

FIG. 23 illustrates the manufacturing steps of a tensioning assembly of an inflatable product, according to one or more embodiments shown and described herein.

### DETAILED DESCRIPTION

Embodiments of the present disclosure are illustrated below, and those skilled in the art may readily understand advantages and effects of the present disclosure from the content disclosed in the description. Although the description of the present disclosure will be introduced in conjunction with preferred embodiments, it does not mean that features of the present disclosure are limited to the implementations described herein. On the contrary, an objective of introducing the present disclosure in conjunction with the embodiments described herein is to encompass other options or modifications that may be extended on the basis of the claims of the present disclosure. The following description contains numerous specific details in order to provide deep understanding of the present disclosure. The present disclosure may also be implemented without these details. In addition, in order to avoid confusion of the present disclosure, some specific details will be omitted in the description. It should be noted that the embodiments and the features thereof in the present disclosure can be combined with each other without conflicts.

In the description of the present disclosure, it should be understood that orientation or position relationships indicated by terms such as "center", "longitudinal", "transverse", "length", "width", "thickness", "up", "down", "front", "rear", "left", "right", "vertical", "horizontal", "top", "bottom", "inside", "outside", "clockwise", and "anticlockwise" are based on orientation or position relationships shown in the accompanying drawings and are merely for ease of description of the present disclosure and simplification of the description, rather than indicating or implying that the apparatuses or elements referred to must have a specific orientation or be constructed and operated in a specific orientation, and therefore cannot be construed as limiting the present disclosure.

In addition, terms "first", "second", etc. are merely for the purpose of description, and should not be construed as indicating or implying the relative importance or implicitly indicating the number of technical features indicated. Thus, the features defined with "first" and "second" may explicitly or implicitly include one or more features. In the description of the present disclosure, the meaning of "a plurality of" is two or more, unless specifically defined otherwise.

In the present disclosure, it should also be noted that the terms "arrange", "connected", and "connection" should be understood in a broad sense, unless otherwise explicitly specified and limited. For example, the connection may be a secured connection, a detachable connection, or an integral connection; or may be a mechanical connection or an electrical connection; or may be a direct connection, an indirect connection by means of an intermediate medium, or internal communication between two elements. For those of ordinary skill in the art, the specific meaning of the terms mentioned above in the embodiments should be understood in specific cases.

In the present disclosure, unless otherwise explicitly specified and defined, the first feature being "above" or "below" the second feature may include the first and second features being in direct contact, or may include the first and second features being not in direct contact but coming into contact through another feature between them. In addition, the first feature being "above", "over", and "on" the second feature includes the first feature being directly above and obliquely above the second feature, or simply means that the level of the first feature is higher than that of the second feature. The first feature being "below", "beneath", and "on underside of" the second feature includes the first feature being directly below and obliquely below the second feature, or simply means that the level of the first feature is less than that of the second feature.

In the description of the present disclosure, the meaning of "a plurality of" is two or more, unless specifically defined otherwise.

To make the objectives, technical solutions, and advantages of the present disclosure clearer, the technical solutions of the present disclosure will be clearly and completely described with reference to specific embodiments of the present disclosure and corresponding figures.

In the description of the present disclosure, and with reference now to the figures, an inflatable product 10 may comprise at least a first wall 110, a second wall 130, and an inflatable chamber 500 to be inflated, which may be defined by the first wall 110 and the second wall 130. After the pressure intensity of a gas (e.g., air) in the inflatable chamber 500 reaches a desired value, the inflatable product 10 may be in an inflated state and remains in a preset shape. In turn, after the gas in the inflatable chamber 500 is discharged, the inflatable product 10 may be in a deflated state, and the volume of the inflatable product 10 may be greatly reduced relative to the volume thereof in the inflated state, thereby facilitating the storage of the inflatable product 10. An inflatable product 10 according to the present invention may be, for example and without being limiting, an inflatable pool, an inflatable toy, an inflatable sofa, an inflatable mattress, an inflatable stand-up paddle (SUP) board, or any other inflatable body having two opposing walls defining an air chamber and a plurality of tensioning assemblies, as described here below, housed inside the air chamber.

As will be described in additional detail herein, a plurality of tensioning members 410 may be arranged in the inflatable chamber 500 of the inflatable product 10, with each of the plurality of tensioning members 410 being securable (e.g., connectable) to the first wall 110 and the second wall 130. In these embodiments, each of the plurality of tensioning members 410, after being tensioned, may provide a tensile force to the first wall 110 and the second wall 130 to limit the deformation of the inflatable product 10, so that the inflatable product 10 remains in the preset shape after being inflated.

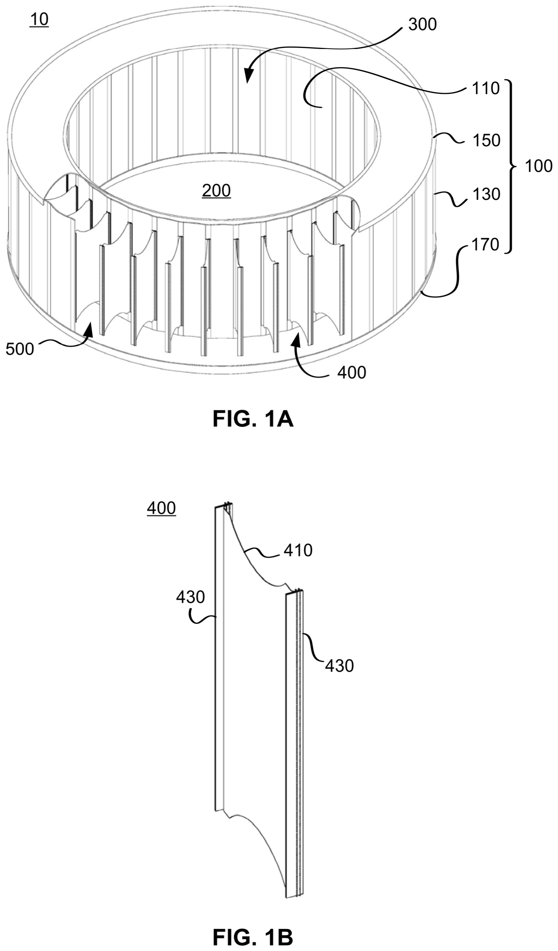

Referring now to FIG. 1A, the inflatable product 10 may be an inflatable pool that may include a pool wall 100 and a pool bottom 200. The pool wall 100 may be connected to the pool bottom 200, defining a water cavity 300. The pool wall 100 may comprise an inner wall (also referred to as a first wall) 110, an outer wall (also referred to as a second wall) 130, and an inflatable chamber 500, and the inflatable chamber 500 may be defined between the inner wall 110 and the outer wall 130.

In some embodiments, the pool wall 100 may further include a top wall 150 and a bottom wall 170. The top wall 150 may be connected to an upper end of the inner wall 110 and an upper end of the outer wall 130, respectively, and the bottom wall 170 may be connected to a lower end of the inner wall 110 and a lower end of the outer wall 130, respectively. In these embodiments, inner wall 110, the outer wall 130, the top wall 150 and the bottom wall 170 may define the inflatable chamber 500.

In operation, external air may enter the inflatable chamber 500 through an air inlet (not shown in the figure) provided on the pool wall 100 to inflate the inflatable chamber 500. A plurality of tensioning assemblies 400 may be arranged in the inflatable chamber 500. One end of each tensioning assembly 400 may be connected to the inner wall 110, and the other end of the tensioning assembly 400 may be connected to the outer wall 130. The inner wall 110 and the outer wall 130 may be, respectively, pulled by the tensioning assemblies 400 toward the inflatable chamber 500, so that the pool wall 100 and the inflatable chamber 500 remain in a desired shape (e.g., the preset shape).

It should be appreciated that, in the embodiments described herein, each tensioning assembly 400 of the inflatable pool 10 in FIG. 1A may be vertically or substantially vertically disposed in the inflatable chamber 500. These tensioning assemblies 400 may be arranged in an array in the inflatable chamber 500. It can be understood that the tensioning assemblies 400 vertically or substantially vertically arranged may be only used to illustrate specific implementations of the present disclosure. For example, each tensioning assembly 400 may be at an acute angle (e.g., but not limited to, approximately 5 degrees, approximately 10 degrees, approximately 15 degrees, approximately 20 degrees, approximately 25 degrees, approximately 30 degrees, approximately 35 degrees, approximately 40 degrees, approximately 45 degrees, approximately 50 degrees, approximately 55 degrees, approximately 60 degrees, approximately 65 degrees, approximately 70 degrees, approximately 75 degrees, approximately 80 degrees, or approximately 85 degrees) with a horizontal plane. In another embodiment, the tensioning assemblies 400 may be horizontally or substantially horizontally arranged. Except for a difference in an angle between the tensioning assemblies 400 and the horizontal plane, these embodiments may be the same or substantially the same as those in which the tensioning assemblies 400 may be vertically or substantially vertically arranged.

Although the plurality of tensioning assemblies 400 depicted in FIG. 1A are described as being vertically or horizontally arranged, it should be further appreciated that, in some embodiments, the plurality of tensioning assemblies 400 may include other orientations and/or arrangements without departing from the scope of the present disclosure. For example, in some embodiments, the plurality of tensioning assemblies 400 may be configured in nonlinear and/or non-orthogonal orientations. In these embodiments, the plurality of tensioning assemblies 400 may be curved, looped, or serpentine in shape, such that the plurality of tensioning assemblies 400 follow an S-curve or a sinusoidal profile. Furthermore, in some other inflatable products, the plurality of tensioning assemblies 400 may include dome-shaped or circular structures, or tree-shaped or fan-shaped structures, which may be configured to distribute a tensile load over a larger area (e.g., of a wall of the inflatable structure).

Referring to FIG. 1B, which shows an exemplary tensioning assembly 400 that can be implemented in any inflatable product 10, each tensioning assembly 400 comprises a tensioning member 410 and two connecting members 430. The connecting members 430 may be each optionally elongated. The connecting members 430 may be sewn to the tensioning members 410. One connecting member (also referred to as a first connecting member) 430 may be connected to the inner wall 110 of the inflatable pool, and the other connecting member (also referred to as a second connecting member) 430 may be connected to the outer wall 130 of the inflatable pool. Optionally, the two connecting members 430 may be respectively welded to the inner wall 110 or the outer wall 130 of the inflatable pool.

In order to improve production efficiency, in some embodiments, the tensioning assemblies 400 may be optionally mass-manufactured by a production department. The mass-manufactured tensioning assemblies may be transported to another production department and then connected to the inner wall 110 and the outer wall 130 of the inflatable pool.

In addition to being mass-manufactured, as described hereinabove, it should be further appreciated that, in some embodiments, the tensioning assemblies 400 described herein may be manufactured as modular components that may be retrofit into an existing inflatable product. For example, in these embodiments, the connecting members (e.g., first and second connecting members, etc.) may include adhesive layers and/or mechanical fasteners that enable the connecting members to be secured to the inner wall 110. Furthermore, in some embodiments, the tensioning assemblies may be retrofit into an existing inflatable for repair purposes. In these embodiments, the inflatable chamber may include a resealable panel, such as an access panel, in which a tensioning assembly may be inserted, such that damaged and/or overstretched tensioning assemblies may be replaced without fully disassembling the inflatable product.

The tensioning assemblies 400 mentioned above may be also applicable to other inflatable products, including, but not limited to, inflatable toys, inflatable sofas, inflatable mattresses, inflatable stand-up paddle (SUP) boards, etc. For example, in these embodiments, the tensioning assemblies 400 may be implemented within any inflatable product 10 having two opposing walls defining an air chamber. Two tensioning members 410 in each of several tensioning assemblies 400 may be respectively connected to the two opposing walls. When the inflatable product 10 is inflated, the tensioning assemblies 400 may be tensioned and provide a tensile force to limit deformations of the two opposing walls, enabling the inflatable product 10 to remain in a certain shape.

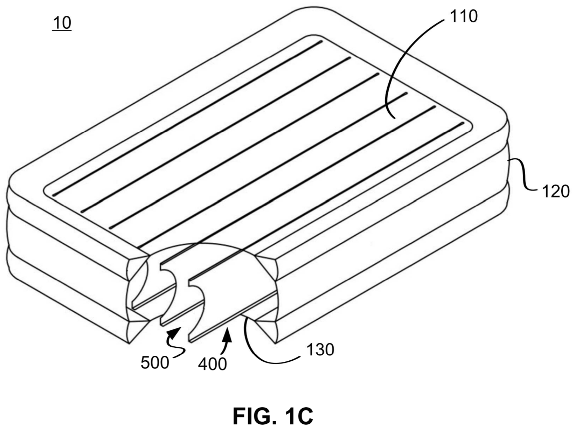

For example, referring to FIG. 1C, the inflatable product 10 may be an inflatable mattress, which comprises a top wall 110 (also referred to as a first wall), a bottom wall 130 (also referred to as a second wall), and a side wall 120. An upper end of the side wall 120 may be connected to the outer periphery of the top wall 110, and a lower end of the side wall 120 may be connected to the outer periphery of the bottom wall 130, so that the top wall 110, the bottom wall 130, and the side wall 120 define an inflatable chamber 500. A plurality of tensioning assemblies 400 may be arranged in the inflatable chamber 500, and each end, in particular the upper and lower ends, of each tensioning assembly 400 may be connected to the top wall or first wall 110 and to the bottom wall or second wall 130, respectively. The tensioning assemblies 400 may be optionally arranged in an array. After the inflatable mattress 10 may be inflated, the tensioning assemblies 400 may be tensioned and provide a tensile force to limit deformations of the top wall 110 and the bottom wall 130, enabling the inflatable mattress 10 to remain in a preset shape.

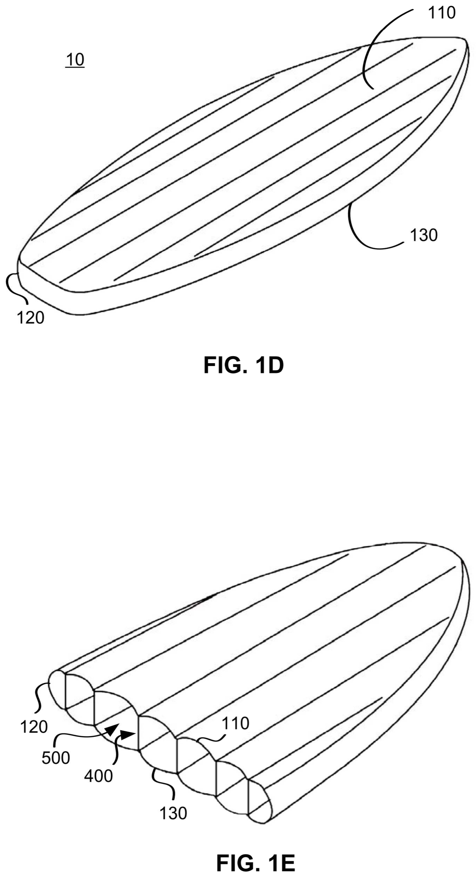

In other embodiments, such as those depicted in FIGS. 1D and 1E, the inflatable product 10 may be an inflatable stand-up paddle board which comprises a top wall 110 (also referred to as a first wall), a bottom wall 130 (also referred to as a second wall), and a side wall 120. An upper end of the side wall 120 may be connected to the outer periphery of the top wall 110, and a lower end of the side wall 120 may be connected to the outer periphery of the bottom wall 130, so that the top wall 110, the bottom wall 130, and the side wall 120 define an inflatable chamber 500. A plurality of tensioning assemblies 400 may be arranged in the inflatable chamber 500, and each end, in particular the upper and lower ends, of each tensioning assembly 400 may be connected to the top wall 110 and the bottom wall 130, respectively. In some embodiments, the tensioning assemblies 400 may be optionally arranged in an array. After the inflatable stand-up paddle board 10 is inflated, the tensioning assemblies 400 may be tensioned and provide a tensile force to limit deformations of the top wall 110 and the bottom wall 130, enabling the stand-up paddle board 10 to remain in a preset shape.

The following describes in detail various specific embodiments of the tensioning assembly 400 of the present disclosure, using the inflatable product 10 as an example of the inflatable pool shown in FIG. 1A. The same description of the tensioning assembly can be applied also to any of the above mentioned inflatable product 10.

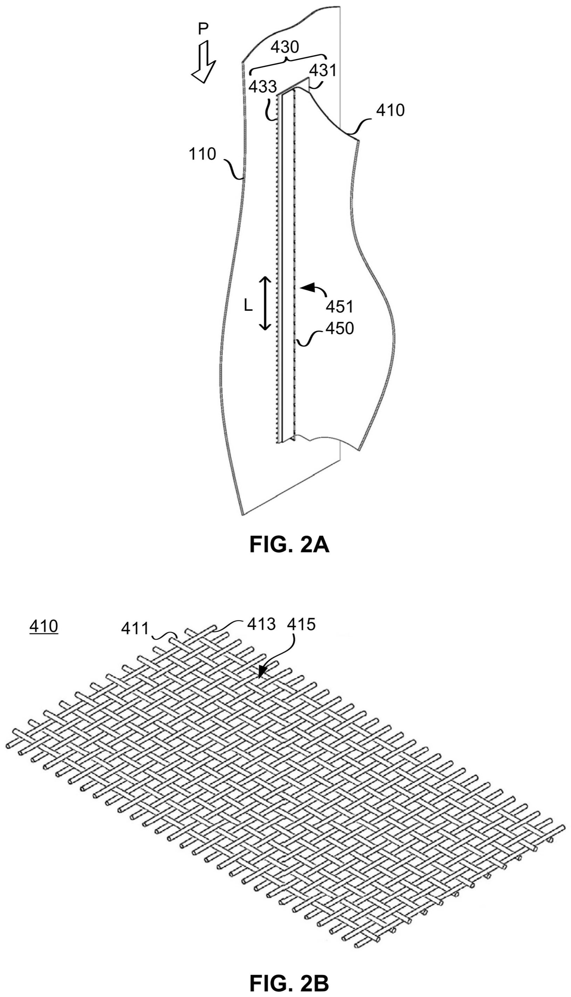

Referring now to FIG. 2A, a schematic structure for connecting the tensioning assembly 400 to the pool wall 100 of the inflatable pool 10 is depicted. Furthermore, it should be appreciated that FIG. 16 similarly depicts an illustrative flowchart of a manufacturing process for forming the inflatable pool 10. The tensioning member 410 may be connected to the inner wall 110 (also referred to as a first wall) of the inflatable pool 10 by a connecting member 430. For example, the tensioning member 410 may be connected to the connecting member 430, and the connecting member 430 may be connected to the inner wall 110, so that the tensioning member 410 may be indirectly connected to the inner wall 110 through the connecting member 430. It should be appreciated that a connection manner between the tensioning member 410 and the outer wall 130 (also referred to as a second wall) may be the same as a connection manner between the tensioning member 410 and the inner wall 110. For ease of description, the following detailed description will be given to the connection manner of the tensioning member 410 to the inner wall 110 and the outer wall 130 on the basis of FIG. 2A, by taking the connection manner of the tensioning member 410 to the inner wall 110 as an example.

In some embodiments, the tensioning member 410 may be made of a high tensile-resistance material with an elastic modulus allowing the tensioning member to only have a small deformation when subjected to a large tensile force. In these embodiments, the tensioning member 410 may be made of a woven fabric, and the tensioning member 410 may be connected to the connecting members 430 by sewing.

The woven fabric may be a flat woven fabric or a three-dimensional woven fabric, which may be made of one or more types of fibers (such as natural fibers or chemical fibers). For example, the one or more types of fibers may be selected from, but not limited to, the following materials: cotton fiber, linen fiber, silk fiber, nylon fiber, polyester fiber, polyethylene fiber, polyacrylonitrile fiber (PAN fiber), or ultra-high molecular weight polyethylene fiber (UHMWPEF).

It should be understood that there may be many kinds of natural fibers or chemical fibers, and for the sake of brevity, they may be not listed here, but only some common examples may be provided, and these examples do not constitute a limitation on the specific implementations of the present disclosure. Specific implementations based on these fibers may be all included within the scope of protection of the present disclosure.

Turning now to FIG. 2B, woven fabric that can be used to make the tensioning member 410 is depicted. The woven fabric may be formed by interweaving a plurality of strands 411 arranged in parallel and a plurality of strands 413 arranged in parallel. The strands 411 and the strands 413 may be single-stranded or multiple-stranded, respectively, and may be each made of one or more kinds of fibers (such as natural fibers or chemical fibers as described above). The strands 411 are arranged transversely, preferably orthogonally, to the strands 413. The strands 411 and the strands 413 define a series of meshes 415. It will be appreciated that the woven fabric used to make the tensioning member 410 may have other weave structures, and woven fabrics with known fabric structures can be used to make the tensioning member 410.

The woven fabric used to make the tensioning member may be a cotton woven fabric, a linen woven fabric, a wool woven fabric, a silk woven fabric or a chemical woven fabric (e.g. Oxford fabric). These woven fabrics may have the ability to maintain properties in humid environments and can be directly exposed to an air chamber of an inflatable product without the need for providing a coating on a surface during production. Manufacturing costs and weights of the woven fabrics may be generally less than those of elastic chemical material films of the same area and thickness. In this way, the manufacturing costs and weight of the inflatable product manufactured with the tensioning member may be greatly reduced. Moreover, the woven fabrics can be made of easy-to-degrade materials such as cotton threads or linen threads, so that the inflatable product may be friendlier to the environment.

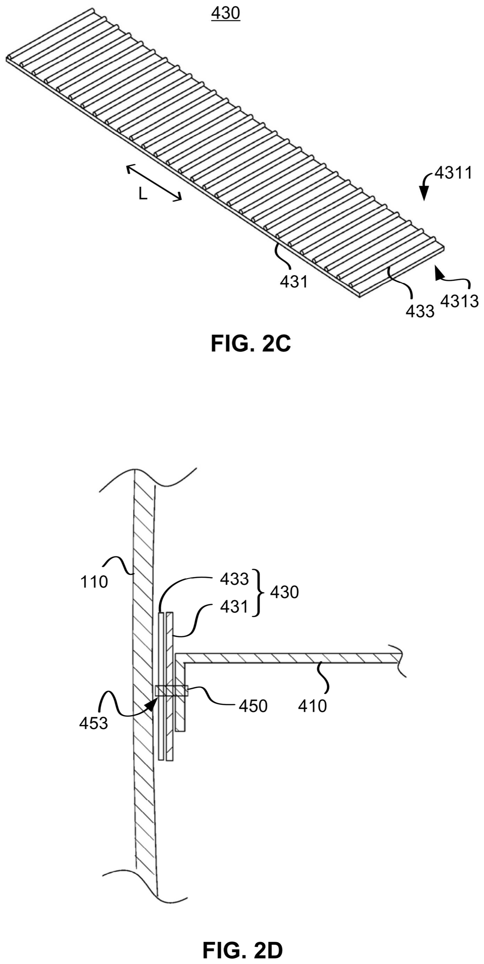

The connecting member 430 may be elongated, such as in the embodiment depicted in FIG. 2C. The connecting member 430 may comprises a connecting strip 431 and several strands 433. The connecting strip 431 has a first surface 4311 and a second surface 4313, and the strands 433 may be secured to one surface (such as the first surface 4311) of the connecting strip 431. The strands 433 may be parallel or substantially parallel to each other. In this embodiment, the strands 433 extend perpendicular or substantially perpendicular to a length direction L (as shown in FIG. 2A) of the tensioning member 410, respectively.

The tensioning member 410 and the connecting member 430 may be sewn to each other by at least one sewing thread 450. In this embodiment, a sewing thread 450 forms a row of stitches 451 on a surface of the tensioning member 410. The stitches 451 may extend in parallel or approximately in parallel to the length direction L of the tensioning member 410. In other words, an extension direction of the strands 433 in the connecting member 430 may be perpendicular or substantially perpendicular to an extension direction of the stitches 451. However, it should be appreciated that, in other embodiments, the surface of the tensioning member 410 may include two (or more) rows, parallel or substantially parallel to each other, of stitches 451, each row of stitches 451 being parallel or substantially parallel to the length direction L of the tensioning member 410.

Referring now to FIG. 2D, another schematic diagram of the structure shown in FIG. 2A, viewed in a direction of arrow P in FIG. 2A, is illustrated. The sewing thread 450 may extend back and forth through the connecting member 430, thereby forming stitches 451 on the connecting member 430. The connecting strip 431 may be located between the strands 433 and the tensioning member 410. The sewing thread 450 may pass through the connecting strip 431 from one side (or referred to as a first side, for example, a right side of the connecting strip 431 in the orientation shown in FIG. 2D) of the connecting strip 431, and may form a series of hoops 453 together with the connecting strip 431 on the other side (referred to as a second side, for example, a left side of the connecting strip 431 in the orientation shown in FIG. 2D) of the connecting strip 431. Some or all of the strands 433 pass through the hoops 453. In an embodiment, one or more strands 433 may pass through each of the hoops 453. In another embodiment, one or more strands 433 may pass through one hoop 453, and no strand 433 passes through the other hoop 453. In this way, when an external force creates causes the tensioning member 410 and the connecting member 430 to separate from each other, each strand 433 passing through a corresponding hoop may prevent the tensioning member 410, by means of the corresponding hoop 453, from detaching from the connecting member 430, so that the tensioning member 410 and the connecting member 430 may be securely engaged.

In the embodiments described herein, it should be appreciated that it may be difficult to directly secure tensioning members made of woven fabrics to a wall of an inflatable product by using methods such as hot pressing, welding (e.g., thermal welding or high-frequency welding), and the like. While these tensioning members can be secured to the wall of the inflatable product by gluing, if the gluing strength is insufficient, the material will be sometimes separated at a glued position under a high inflation pressure of the inflatable product. In this embodiment, the connecting member 430 may be configured to connect the tensioning member 410 to the inner wall 110 of the inflatable pool 10, thereby solving the problem of an unreliable connection between the tensioning member 410 and the inner wall 110. For ease of presentation, the following description will often explicitly refer only to the first (inner/upper) wall 110, without limiting the scope of protection. The same considerations made in connection with the first (inner/upper) wall 110 can be applied equally to the second (outer/lower) wall 130.

In view of the foregoing, it should be further understood that the connecting member 430 may be configured to connect the tensioning member 410 to the inner (or first) wall 110 of the inflatable pool 10 using any suitable coupling means and/or mechanism configured to ensure that a reliable connection between the tensioning member 410 and the inner wall 110 is achieved. For example, in some embodiments, the connecting member 430 may be bonded to the tensioning member using adhesives such as polyurethane-based hot-melt adhesives, pressure-sensitive adhesives, thermosetting resins, or any other similar adhesive. Furthermore, in other embodiments, mechanical fasteners (e.g., grommets, flanges, fastening pads, etc.) may extend through the connecting member 430, tensioning member 410, and/or inner wall 110 to secure the tensioning member 410 and the inner wall 110. In some other embodiments, ultrasonic welding may be implemented, particularly in embodiments in which the tensioning member 410 and the inner wall 110 are formed of materials that exhibit thermoplastic compatibility.

Referring to FIGS. 2A - 2D, the connecting strip 431 in the connecting member 430 may be made of polyvinyl chloride (PVC). Analoguosly, also the first/inner wall 110 and/or the second/outer wall 130 of the inflatable pool 10 (or of the inflatable product 10) may be optionally also made of (or mainly made of) PVC. In this way, the connecting member 430 and the inner wall 110 of the inflatable pool 10 can be easily connected by high-frequency welding, wherein the strands 433 of the connecting member 430 may be sandwiched between the connecting strip 431 and the inner wall 110. For example, in some embodiments, the inner wall of the inflatable pool 10 may be optionally made of a laminated material, wherein the laminated material comprises two layers of PVC connecting strips and a woven fabric mesh sandwiched therein.

Although the connecting strip 431 and the inner wall 110 (or first wall) of the inflatable pool 10 are described as being made of PVC, it should be appreciated that, in some embodiments, the connecting strip 431 and/or the inner wall 110 may be formed of any material (e.g., thermoplastic, elastomers, etc.) without departing from the scope of the present disclosure. For example, in some embodiments, the connecting strip 431 and/or the inner wall 110 may be formed of polyurethane, ethylene-vinyl acetate, or any other similar material. Furthermore, in some other embodiments, the connecting strip 431 and/or the inner wall 110 may be formed of composites, such as laminated dual-layer composite structures, including both a PVC layer and an additional layer formed of thermoplastic and/or elastomer material, as described hereinabove. It should be further understood that, in these embodiments, the connecting strip 431 and the inner wall 110 may be formed of either the same material or different materials (e.g., such that a first material of the connecting strip 431 is different from a second material of the inner wall 110) without departing from the scope of the present disclosure.

As described hereinabove, the tensioning member 410 and the connecting member 430 may be fixedly connected, and the connecting member 430 and the inner wall 110 of the inflatable pool 10 may be fixedly connected, so that the tensioning member 410 may be fixedly connected to the inner wall 110 of the inflatable pool 10 by the connecting member 430.

The strands 433 of the connecting member 430 may be secured to the first surface 4311 of the connecting strip 431 (i.e., an upper surface of the connecting strip 431 in the orientation shown in FIG. 2C).

Furthermore, it should be appreciated that, when the inflatable pool 10 is in an inflated state, the tensioning member 410 may be subjected to a tensile force, and each hoop 453 applies a tensile force to the middle of one or more strands 433 passing therethrough. The stressed strands 433 may be drawn out of needle holes in the connecting strip 431 through which the sewing thread 450 passes, causing a reduction in the strength of the connection between the tensioning member 410 and the connecting member 430, or even causing the connection to fail, thereby reducing the reliability and safety of the inflatable pool 10.

Referring to FIG. 3A, in order to enhance the strength of the connection between the tensioning member 410 and the connecting member 430, each of the strands 433 of the connecting member 430 may comprise a plurality of fibers 4331. In addition, before the connecting member 430 is sewn to the tensioning member 410, the fibers 4331 may be wrapped by a first high-polymer material 435. The first high-polymer material 435 may comprise polyvinyl chloride. The first high-polymer material 435 may be secured to both the fibers 4331 and the connecting strip 431, thereby securing the fibers 4331 to the connecting strip 431 (as in FIG. 5C). The first high-polymer material 435 may distribute the tensile force exerted on each strand 433 to the connecting strip 431 along the length of each strand, thereby preventing the strand 433 from being drawn out from sewing positions in the connecting strip 431 through which the sewing thread 450 passes. Thus, the distribution of the fibers 4331 in the first high-polymer material may greatly enhance the strength of the connection between the tensioning member 410 and the connecting member 430.

In the embodiments described herein, the fibers 4331 may be spirally twisted together to form the strands 433. Compared with the fibers 4331 distributed parallel (or approximately parallel) in the first high-polymer material, the spirally-twisted fibers 4331 have a larger surface area for contact with the first high-polymer material, which may further enhance the strength of the connection between the tensioning member 410 and the connecting member 430.

In the embodiments described herein, it should be appreciated that the plurality of fibers 4331 may be in the form of an elongate strand, a filament, a bundle of filaments, or any other similar configuration such that the plurality of fibers may be twisted and/or woven together to form the plurality of strands 433, as described in detail hereinabove.

A process of manufacturing the connecting member 430 may be described below based on a configuration that the fibers 4331 may be spirally twisted together. It may be appreciated that, in these embodiment, the fibers 4331 may be arranged in parallel without being twisted together, while the first high-polymer material can still prevent the strand 433 from being drawn out of the sewing positions in the connecting strip 431 through which the sewing thread 450 passes.

Referring to FIGS. 3B, 3C and 3D, the fibers 4331 may be secured by the first high-polymer material 435. In these embodiments, the first high-polymer material 435 may be formed into a cylindrical body and has cavities 4351 extending internally along the length thereof. The fibers 4331 may be enclosed in these cavities 4351. It will be appreciated that, in some embodiments, the first high-polymer material 435 may have other structures. For example, without being limitative to this specific structure or without departing from the scope of the present disclosure, the first high-polymer material 435 may have a structure in a platelike, block-like, or any other desired shape and have helical cavities 4351 extending internally.

The strand 433 shown in FIGS. 3A to 3D may also comprise a plurality of strands of fibers 4331, such as four strands of fiber, with each strand of fibers 4331 comprising a filament or a bundle of filaments. Although the plurality of strands 4331 are depicted as including four strands of fibers, it should be appreciated that each strand 433 may comprise more or fewer strands of fibers 4331.

Referring to FIGS. 4 and 17, in this embodiment, strands 433 may be secured to a sheet material 421 by the first high-polymer material 435.

Referring to FIG. 18, in particular, the strands 433 may be first embedded in a first surface 4211 of the sheet material 421 by hot pressing. The sheet material 421 may be partially or entirely heated to soften. The sheet material 421 comprises also a second surface 4213, opposed to the first surface 4211. The second surface 4213 of the sheet material 421 corresponds to the plurality of second surfaces 4313 of the connecting strip 431, placed one adjacent the other.

Referring to FIGS. 4 and 5A, several strands 433 may be placed side by side on the first surface 4211 of the sheet material 421 (corresponding to the first surface 4311 of the connecting strip 431 in FIGS. 2C and 2D). The sheet material 421 may be made of a high-polymer material and may be entirely heated to soften by a heated surface (such as a heated sheet metal surface) that it may be placed on, the heated surface being configured to heat the sheet material.

Referring to FIGS. 4 and 5B, while the sheet material 421 may be still in a softened state, the first surface 4211 and the strands 433 placed thereon may be pressed (e.g., by a rubber roller), thereby sinking the strands 433 into the first surface 4211 of the softened sheet material 421. The fibers 4331 in the strands 433 may be partially embedded in the first surface 4211 of the sheet material 421, and the strands 433 may be initially secured to the first surface 4211 of the sheet material 421.

It should be appreciated that the sheet material 421 may, in some embodiments, be heated by other means. For example, in some embodiments, the sheet material 421 may be heated by passing over the surface of a heated metal roller. In another alternative embodiment, the first surface 4211 of the sheet material 421, along with the strands 433 placed thereon, may be heated and compressed by a hot pressing device. The hot pressing device may soften a surface portion of the sheet material 421 and sinks the strands 433 into the softened first surface 4211 of the sheet material 421.

Referring to FIGS. 4 and 5C, after the strands 433 have been initially secured to the first surface 4211 of the sheet material 421, the first surface 4211 of the sheet material 421 may be coated with a first mixture used to produce the first high-polymer material 435. The first mixture has fluidity and may pass between the strands 433 and the sheet material 421 by osmosis, and between the fibers 4331 of each strand 433. The sheet material 421 (along with the strands 433 attached thereto and the first mixture) may be moved to an oven to be heated, so that the first mixture may be cured to form the first high-polymer material 435, thereby firmly securing the strands 433 to the sheet material 421. The first high-polymer material 435 not only wraps the strands 433, but also covers a portion of the first surface 4211 of the sheet material 421 not covered by the strands 433.

At this point, the manufacturing of the connecting sheet 420 is completed. The connecting sheet 420 includes the sheet material 421 and the strands 433 secured thereto.

Referring to FIG. 4, the connecting sheet 420 may be cut in directions indicated by the dashed lines to obtain several connecting members 430. Each connecting member 430 comprises a connecting strip 431.

It will be appreciated that two connecting members 430 of the same tensioning assembly 400 may come from the same connecting sheet 420 or different connecting sheets 420.

As illustrated in FIG. 4, the connecting sheet 420 may be exemplarily divided into a plurality of connecting members 430, such as four connecting members. However, it should be appreciated that the connecting sheet 420 may be divided into more or fewer connecting members 430.

Furthermore, in the embodiments described herein, since the main ingredient of the first high-polymer material 435 may be PVC, the connecting member 430 can be easily welded to a surface of other PVC articles (e.g., the inner wall 110 of the inflatable pool 10).

In the embodiments described herein, the connecting strip 431 may be made of PVC and the strands 433 may be optionally made of polyester fibers. The plurality of first fibers 4331 are preferably made of polyester fibers. The connecting strip 431 may further contain other components, such as a plasticizer. The first mixture may be a mixture of polyvinyl chloride paste resin (PVC paste resin), a plasticizer, and a cross-linking agent. The cross-linking agent is a polymer of 1,3-diisocyanato-2-methylbenzene and 2,4-diisocyanato-1-methylbenzene. After the curing operation (e.g., heating the first mixture), the polyvinyl chloride paste resin may be cured and transformed from a suspension state to a solid state, whereby the first mixture may be transformed from a flowable state to a solid high-polymer material (i.e., the first high-polymer material) using PVC as the main ingredient (e.g., with a weight ratio of more than 50%) and may be firmly bonded to the connecting strip 431, wherein the first high-polymer material mainly comprises PVC, a plasticizer and a cross-linking agent. The cross-linking agent in the first high-polymer material matches a material used to make the fibers 4331 so as to increase the bonding strength of the first high-polymer material to the fibers 4331 in the strands 433. In this way, the strands 433 may be firmly secured to the connecting strip 431. The plasticizer can increase the plasticity of the first high-polymer material, preventing it from breaking when folded. This may be particularly advantageous for inflatable products which often need to be deflated and then stored or transported.

The plasticizer may be optionally selected from phenyl alkyl sulfonate, and the cross-linking agent may be optionally selected from a polymer of 1,3-diisocyanato-2-methylbenzene and 2,4-diisocyanato-1-methylbenzene. It will be appreciated that in alternative embodiments, the connecting strip 431 may be made of other high-polymer materials, and the strands 433 may be made of other fibers. It will also be appreciated that any other available plasticizers and cross-linking agents may be employed, for example, the plasticizer may employ dioctyl terephthalate (DOTP), and the cross-linking agent may employ triallyl isocyanurate (TAIC).

In some embodiments, the connecting strip 431 may alternatively be made of other high-polymer materials, so long as the high-polymer materials may be weldable with respect to the wall of the inflatable pool 10.

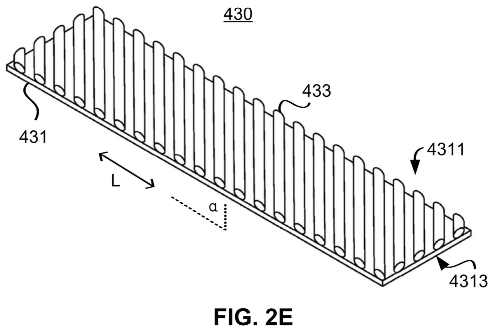

It should be further appreciated that, in some embodiments, the strands 433 may be disposed obliquely on the connecting strip 431. For example, referring to FIG. 2E, an acute angle α may be formed between an extension direction of the strands 433 and the length direction L of the connecting strip 431.

It should be further appreciated that, in some alternative embodiments, each connecting member 430 may be separately manufactured in the same manner as the method for manufacturing the connecting sheet 420 described above.

Referring to FIG. 19, the structure of the inflatable pool 10 of this second embodiment may be substantially the same as that of the inflatable pool of the first embodiment. However, the difference may be that, before the strands 433 may be secured to the connecting strip 431, coated strands may be made on the basis of the strands 433, and the coated strands may be then secured to the connecting strip 431, thereby securing the strands 433 to the connecting strip 431.

Referring to FIG. 6A, strands that need to be secured to the first surface 4311 of the connecting strip 431 may be first immersed into the first mixture used to produce the first high-polymer material. The first mixture has fluidity and may pass between the fibers 4331 of each strand 433 by osmosis. The strands 433 (along with the first mixture attached thereto) may be transferred into an oven to be heated, so that the first mixture may be cured, and the first high-polymer material 435 wraps the fibers 4331 of the strands 433, resulting in some coated strands 4333.

The connecting strip 431 may be made of a high-polymer material and may be entirely heated to soften by being placed on a heated surface (such as a heated sheet metal surface) that it may be placed on, the heated surface being configured to heat the connecting strip.

Subsequently, referring to FIG. 6B, the coated strands 4333 may be placed side by side on the first surface 4311 (FIGS. 2C and 2D) of the connecting strip 431. When the connecting strip 431 may be still in a softened state, the first surface 4311 and the coated strands 4333 placed thereon may be pressed (e.g., by a rubber roller), thereby sinking the coated strands 4333 into the first surface 4311 of the softened connecting strip 431. The first high-polymer material 435 of the coated strands 4333, which contacts the first surface 4311, also softens, thereby making full contact and fusion with the softened first surface 4311 of the connecting strip 431.

Referring to FIG. 6C, the coated strands 4333 may be partially embedded into the first surface 4311 of the connecting strip 431, so that the coated strands 4333 may be firmly secured to the connecting strip 431. In other words, the first high-polymer material 435 secures the strands 433 firmly to the connecting strip 431.

It should be appreciated that, in some embodiments, the connecting strip 431 may be heated by other means. For example, in an alternative embodiment, the connecting strip 431 may be heated by passing over the surface of a heated metal roller. In another alternative embodiment, the first surface 4311 of the connecting strip 431, along with the coated strands 4333 placed thereon, may be heated and compressed by a hot pressing device; and the hot pressing device softens a surface portion of the connecting strip 431 and sinks the coated strands 4333 into the first surface 4311 of the softened connecting strip 431.

The connecting strip 431 secured with the strands 433 (and the first high-polymer material) may be then cut to the desired size to obtain the desired connecting members 430. Since the main ingredient of the connecting strip 431 and the main component of the first high-polymer material 435 may be PVC, the connecting member 430 can be easily welded to the surface of other PVC articles (e.g., the inner wall 110 of the inflatable pool 10).

The composition of the connecting strip 431, the strands 433, the first mixture and the first high-polymer material in this embodiment may be similar to those described in the previous embodiments provided herein..

Referring to FIG. 20, the structure of the inflatable pool 10 of this third embodiment may be substantially the same as that of the inflatable pool of the first embodiment. However, the difference may be that before the strands 433 is secured to the connecting strip 431, a layer of high-polymer material for securing the strands 433 may be formed on the surface of the connecting strip 431.

Referring to FIG. 7A, the first mixture used to produce the first high-polymer material may be first coated on the first surface 4311 of the connecting strip 431. The connecting strip 431 coated with the first mixture may be transferred into an oven to be heated, so that the first mixture may be cured to form the first high-polymer material 435, whereby the first high-polymer material 435 covers the first surface 4311 of the connecting strip 431 and forms a first high-polymer material layer 4353.

The connecting strip 431 may be made of a high-polymer material and may be entirely heated by being placed on a heated surface (such as a heated sheet metal surface) that it may be placed on, the heated surface being configured to heat the connecting strip. The first high-polymer material layer 4353 softens.

In some embodiments, both the connecting strip 431 and the first high-polymer material layer 4353 soften, such that the first high-polymer material 435 forming the first high-polymer material layer 4353 may have a greater fluidity than the high-polymer material used to form the connecting strip 431. In these embodiments, the fibers 4331 in the strands 433 may be partially embedded into the first surface 4311 of the connecting strip 431.

Subsequently, referring to FIG. 7B, several strands 433 may be placed side by side on the first high-polymer material layer 4353. While the first high-polymer material layer 4353 may be still in a softened state, the first high-polymer material layer 4353 and the strands 433 placed thereon may be pressed (e.g., by a rubber roller), thereby sinking the strands 433 into the softened first high-polymer material layer 4353.

Referring to FIG. 7C, the softened first high-polymer material 435 may pass between the fibers 4331 of each strand 433 by osmosis, so that the fibers 4331 may be wrapped by the first high-polymer material 435. In this way, the first high-polymer material 435 secures the strands 433 firmly to the connecting strip 431.

In other words, by hot pressing, the strands 433 may be sealed into the first high-polymer material layer 4353.

It should be further appreciated that the connecting strip 431 and the first high-polymer material layer 4353 may also be heated by other means. For example, in an alternative embodiment, the connecting strip 431 and the first high-polymer material layer 4353 may be heated by passing over the surface of a heated metal roller. In another embodiment, the connecting strip 431 and the first high-polymer material layer 4353, along with the strands 433 placed thereon, may be heated and compressed by a hot pressing device; and the hot pressing device softens the first high-polymer material layer 4353 (optionally along with a surface portion of the connecting strip 431), sinking the strands 433 into the softened first high-polymer material layer 4353 and the first surface 4311 of the softened connecting strip 431.

The connecting strip 431 secured with the strands 433 (and the first high-polymer material) may be then cut to the desired size to obtain the desired connecting members 430. Since the main ingredient of the first high-polymer material 435 may be PVC, the connecting member 430 can be easily welded to a surface of other PVC articles (e.g., the inner wall 110 of the inflatable pool 10).

The composition of the connecting strip 431, the strands 433, the first mixture and the first high-polymer material may be similar to those described in the previous embodiments provided herein..

Referring to FIG. 21, the structure of the inflatable pool 10 of this fourth embodiment may be substantially the same as that of the inflatable pool of the first embodiment. However, the difference may be that before the strands 433 may be secured to the connecting strip 431, the coated strands 4333 may be made on the basis of the strands 433; and after the coated strands 4333 may be secured to the connecting strip 431, the connection between the coated strands and the connecting strip 431 may be reinforced by a high-polymer material layer.

Referring to FIG. 8A, strands that need to be secured to the first surface 4311 of the connecting strip 431 may be first immersed into the first mixture used to produce the first high-polymer material 435. The first mixture has fluidity and passes between the fibers 4331 of each strand 433 by osmosis. The strands 433 (along with the first mixture attached thereto) may be transferred into an oven to be heated, so that the first mixture may be cured and the first high-polymer material 435 wraps the fibers 4331 of the strands 433, resulting in some coated strands 4333.

The connecting strip 431 may be made of a high-polymer material and may be entirely heated to soften by being placed on a heated surface (such as a heated sheet metal surface) that it may be placed on, the heated surface being configured to heat the connecting strip.

Subsequently, referring to FIG. 8B, the coated strands 4333 may be placed side by side on the first surface 4311 (FIGS. 2C and 2D) of the connecting strip 431. When the connecting strip 431 may be still in a softened state, the first surface 4311 and the coated strands 4333 placed thereon may be pressed (e.g., by a rubber roller), thereby sinking the coated strands 4333 into the first surface 4311 of the softened connecting strip 431. The first high-polymer material 435 of the coated strands 4333, which contacts the first surface 4311, also softens, thereby making full contact and fusion with the softened first surface 4311 of the connecting strip 431.

Referring to FIG. 8C, the coated strands 4333 may be partially embedded into the first surface 4311 of the connecting strip 431, so that the coated strands 4333 may be firmly secured to the connecting strip 431. In other words, the first high-polymer material 435 secures the strands 433 firmly to the connecting strip 431.

It should be further appreciated that the connecting strip 431 may be heated by other means. For example, in an alternative embodiment, the connecting strip 431 may be heated by passing over the surface of a heated metal roller. In another alternative embodiment, the first surface 4311 of the connecting strip 431, along with the coated strands 4333 placed thereon, may be heated and compressed by a hot pressing device; and the hot pressing device may soften a surface portion of the connecting strip 431 and sinks the coated strands 4333 into the first surface 4311 of the softened connecting strip 431.

Turning now to FIG. 8D, the first surface 4311 of the connecting strip 431 and the coated strands 4333 may be coated with a continuous layer of a second mixture for producing a second high-polymer material 437. The connecting strip 431 coated with the second mixture (along with the coated strands 4333 attached thereto) may be transferred into an oven to be heated, so that the second mixture may be cured to form a second high-polymer material 437, whereby the second high-polymer material 437 forms a continuous second high-polymer material layer 4373. Portions of the surfaces of the coated strands 4333 and portions of the first surface 4311 of the connecting strip 431 that may be not in contact with each other may be covered and connected by the second high-polymer material layer 4373, so that the connection between the coated strands 4333 and the connecting strip 431 may be enhanced.

The second mixture may be optionally a mixture of a polyvinyl chloride paste resin and a plasticizer. After being heated, the polyvinyl chloride paste resin may be cured and transformed from a suspension state to a solid state, whereby the second mixture may be transformed from a flowable state to a solid high-polymer material (i.e., the second high-polymer material) with PVC to be the main ingredient (e.g., with a weight ratio of more than 50%). The cured second mixture may be firmly bonded to the connecting strip 431 and the coated strands 4333, while the second high-polymer material mainly comprises PVC and the plasticizer. The second mixture and the second high-polymer material may further optionally contain a cross-linking agent. The composition of the second mixture may be the same as or different from the composition of the first mixture. Accordingly, the composition of the second high-polymer material may be the same as or different from the composition of the first high-polymer material.

The connecting strip 431 secured with the strands 433 (and the first high-polymer material) may be then cut into connecting members 430 with desired sizes. Since the main ingredient of the second high-polymer material 437 may be PVC, the connecting member 430 can be easily welded to the surface of other PVC articles (e.g., the inner wall 110 of the inflatable pool 10).

The composition of the connecting strip 431, the strands 433, the first mixture and the first high-polymer material 435 in this embodiment can refer to the previous embodiment.

Referring to FIG. 22, the structure of the inflatable pool 10 of this fifth embodiment may be substantially the same as that of the inflatable pool of the fourth embodiment. However, the difference may be that before the coated strands 4333 may be secured to the connecting strip 431, a high-polymer material layer may be formed on the surface of the connecting strip 431.

Referring to FIG. 9A, the first surface 4311 of the connecting strip 431 may be first coated with a third mixture used to produce a third high-polymer material 439. The connecting strip 431 coated with the third mixture may be transferred into an oven to be heated, so that the third mixture may be cured to form a third high-polymer material 439, whereby the third high-polymer material 439 covers the first surface 4311 of the connecting strip 431 and forms a third high-polymer material layer 4393.

Referring to FIG. 9B, strands that need to be secured to the first surface 4311 of the connecting strip 431 may be immersed into the first mixture used to produce the first high-polymer material. The first mixture has fluidity and passes between the fibers 4331 of each strand 433 by osmosis. The strands 433 (along with the first mixture attached thereto) may be transferred into an oven to be heated, so that the first mixture may be cured and the first high-polymer material 435 wraps the fibers 4331 of the strands 433, resulting in some coated strands 4333.

The operating steps corresponding to FIGS. 9A and 9B can be swapped in order.

The connecting strip 431 may be made of a high-polymer material and may be entirely heated by being placed on a heated surface (such as a heated sheet metal surface) that it may be placed on, the heated surface being configured to heat the connecting strip. The third high-polymer material layer 4393 softens.

It will be appreciated that the connecting strip 431 may also be heated by other means. For example, in an alternative embodiment, the connecting strip 431 may be heated by passing over the surface of a heated metal roller. In another alternative embodiment, the first surface 4311 of the connecting strip 431, along with the coated strands 4333 placed thereon, may be heated and compressed by a hot pressing device; and the hot pressing device softens a surface portion of the connecting strip 431 and sinks the coated strands 4333 into the first surface 4311 of the softened connecting strip 431.

Subsequently, referring to FIG. 9C, the coated strands 4333 may be placed side by side on the third high-polymer material layer 4393. While the third high-polymer material layer 4393 may be still in a softened state, the third high-polymer material layer 4393 and the coated strands 4333 placed thereon may be pressed (e.g., by a rubber roller), thereby sinking the coated strands 4333 into the softened third high-polymer material layer 4393. The first high-polymer material 435, contacting the first surface 4333, of the coated strands 4333 also softens, thereby making full contact and fusion with the softened first surface 4311 of the connecting strip 431.

Referring to FIG. 9D, the coated strands 4333 may be partially embedded into the first surface 4311 of the connecting strip 431, so that the coated strands 4333 may be firmly secured to the connecting strip 431. In other words, the first high-polymer material 435 secures the strands 433 firmly to the connecting strip 431.

Optionally, both the connecting strip 431 and the third high-polymer material layer 4393 soften, wherein the third high-polymer material 439 forming the third high-polymer material layer 4393 has a greater fluidity than the high-polymer material used to form the connecting strip 431. The fibers 4331 in the strands 433 may be partially embedded into the first surface 4311 of the connecting strip 431.

Next, referring to FIG. 9E, the first surface 4311 of the connecting strip 431 and the coated strands 4333 may be coated with a continuous layer of a second mixture for producing a second high-polymer material 437. The connecting strip 431 coated with the second mixture (along with the coated strands 4333 attached thereto) may be transferred into an oven to be heated, so that the second mixture may be cured to form a second high-polymer material 437, whereby the second high-polymer material 437 forms a continuous second high-polymer material layer 4373. Portions of the surfaces of the coated strands 4333 and portions of the third high-polymer material layer 4393 that may be not in contact with each other may be covered and connected by the second high-polymer material layer 4373, so that the connection between the coated strands 4333 and the third high-polymer material layer 4393, i.e. between the coated strands 4333 and the connecting strip 431, may be enhanced.

The second mixture may be optionally a mixture of a polyvinyl chloride paste resin and a plasticizer. After being heated, the polyvinyl chloride paste resin may be cured and transformed from a suspension state to a solid state, whereby the second mixture may be transformed from a flowable state to a solid high-polymer material (i.e., the second high-polymer material) with PVC to be the main ingredient (e.g., with a weight ratio of more than 50%) and may be firmly bonded to the connecting strip 431 and the coated strands 4333, while the second high-polymer material mainly comprises PVC and the plasticizer. The second mixture and the second high-polymer material optionally also contain a cross-linking agent. The composition of the second mixture may be the same as or different from the composition of the first mixture. Accordingly, the composition of the second high-polymer material may be the same as or different from the composition of the first high-polymer material.

The third mixture may be optionally a mixture of a polyvinyl chloride paste resin and a plasticizer. After being heated, the polyvinyl chloride paste resin may be cured and transformed from a suspension state to a solid state, whereby the third mixture may be transformed from a flowable state to a solid high-polymer material (i.e., the third high-polymer material) with PVC to be the main ingredient (e.g., with a weight ratio of more than 50%) and may be firmly bonded to the connecting strip 431 and the coated strands 4333, while the third high-polymer material mainly comprises PVC and the plasticizer. The third mixture and the third high-polymer material optionally also contain a cross-linking agent. The composition of the third mixture may be the same as or different from the composition of the first mixture. Accordingly, the composition of the third high-polymer material may be the same as or different from the composition of the first high-polymer material.

The connecting strip 431 secured with the strands 433 (and the first high-polymer material) may be then cut into connecting members 430 with desired sizes. Since the main ingredient of the second high-polymer material 437 may be PVC, the connecting member 430 can be easily welded to the surface of other PVC articles (e.g., the inner wall 110 of the inflatable pool 10).

The composition of the connecting strip 431, the strands 433, the first mixture and the first high-polymer material in this embodiment can refer to the previous embodiment.

Referring to FIG. 10, the structure of the inflatable pool 10 of this alternative embodiment may be substantially the same as that of the inflatable pool of any of the previous embodiments. The difference may be that the tensioning member 410 and the connecting member 430 may be sewn to each other by two sewing threads 450, and each sewing thread 450 forms a row of stitches 451 on the surface of the tensioning member 410. The two rows of stitches 451 may be parallel or substantially parallel to each other and each row of stitches 451 may be parallel or substantially parallel to the length direction L of the tensioning member 410.

Referring to FIGS. 11A and 11B, the structure of the inflatable pool 10 of this further embodiment may be substantially the same as that of the inflatable pool of any of the previous embodiments. The difference may be that the strands 433 extend parallel or substantially parallel to the length direction L of the tensioning member 410, respectively.

In the embodiments described herein, the sewing threads 450 may extend in a zigzag manner to form a series of parallel distributed short segments on the tensioning member. In this way, similar to the first embodiment, the sewing thread 450 may pass through the connecting strip 431 from one side (or referred to as a first side, for example, a right side of the connecting strip 431 in the orientation shown in FIG. 2D) of the connecting strip 431, and forms a series of hoops together with the connecting strip 431 on the other side (or referred to as a second side, for example, a left side of the connecting strip 431 in the orientation shown in FIG. 2D) of the connecting strip 431. In these embodiments, some or all of the strands 433 may pass through the hoops. When an external force causes the tensioning member 410 and the connecting member 430 to separate from each other, each strand 433 passing through a corresponding hoop may prevent the tensioning member 410, by means of the corresponding hoop, from detaching from the connecting member 430, so that the tensioning member 410 and the connecting member 430 may be securely engaged.

Referring to FIGS. 12 and 13, the structure of the inflatable pool 10 of this further embodiment may be substantially the same as that of the inflatable pool of any of the previous embodiments. The difference may be that the connecting member 430 also comprises parallel strands 433'. Each strand 433' may be perpendicular or substantially perpendicular to the strands 433, so that the strands 433 and the strands 433' form a mesh structure. The strands 433 and the strands 433' may be optionally stacked or interwoven, and the strands 433 and the strands 433' can be secured to the connecting strip 431 simultaneously or sequentially.

The strands 433' may be secured to the connecting strip 431 in the same manner as the strands 433 in any of the above embodiments may be secured to further strengthen the connection of the strands 433 to the connecting strip 431.

Referring to FIG. 14, the structure of the inflatable pool 10 of this further embodiment may be substantially the same as that of the inflatable pool of the previous embodiments described hereinabove. However, in this embodiment, the connecting member 430 may further include a plurality of binding strands 434.

In these embodiments, the plurality of binding strands 434 may extend along a direction parallel or substantially parallel to the length direction L of the tensioning member 410, alternately intertwining around two adjacent strands 433 and binding the corresponding strands 433' to the two adjacent strands 433. As the strands 433 and the strands 433' may be secured to each other by the binding strands 434, the stability of the mesh structure formed by the strands 433 and the strands 433' may be increased. During the process of being secured to the connecting strip 431, the binding strands 434 limit the relative sliding between the strands 433 and the strands 433', so that the distance between the strands 433 and the distance between the strands 433' in the final connecting member 430 remain unchanged, thereby effectively dispersing the tensile force of the tensioning member 410 that may be exerted on the strands 433 throughout the connecting member 430, which enhances the tensile capacity of the connecting member 430.

Referring to FIG. 15, the structure of the inflatable pool 10 of this further embodiment may be substantially the same as that of the inflatable pool of any of the previous embodiments. However, it should be appreciated that, in this embodiment, the parallel strands 433 in the connecting member 430 may be replaced with a cellular mesh structure.

The mesh structure may include a plurality of hexagonal frames 436, and each of the hexagonal frames 436 may be defined by one or more fibers. The hexagonal frames 436 may be staggered and evenly distributed so that the mesh structure has a substantially constant tensile strength in different directions, thereby effectively dispersing the tensile force of the tensioning member 410 throughout the connecting member 430, which enhances the tensile capacity of the connecting member 430.

Referring to FIG. 23, and as described in detail hereinabove, for any of the above embodiments, the plurality of tensioning assemblies 400 may be mass-produced. Subsequently, each of the mass-produced tensioning assemblies 400 may be attached to the walls of the inflatable product as described hereinabove.

In view of the foregoing, it should be appreciated that the present disclosure satisfactorily discloses multiple solutions in which the tensioning structures may be connected to the inner wall of the inflatable product through the connecting members, allowing the connecting members to be firmly connected to the inner wall of the inflatable chamber.

Although the present disclosure has been illustrated and described with reference to some preferred implementations of the present disclosure, those of ordinary skill in the art can make various changes in form and details, including several simple deduction or substitutions, without departing from the scope of the present disclosure.

The foregoing descriptions are only embodiments of the present disclosure and are not intended to limit the present disclosure. For those skilled in the art, various changes and variations can be made to the present disclosure. Any modifications, equivalent replacements, and improvements made without departing from the principle of the present disclosure shall fall within the scope of the claims of the present disclosure.

The scope of the present disclosure is defined by the appended claims rather than the above-mentioned description, and therefore it is intended that all changes which fall within the meaning and range of equivalents of the claims are embraced in the present disclosure. Any reference signs in the claims should not be construed as limiting the claims involved. In addition, it is apparent that the word "comprise/include" does not exclude other elements or steps, and the singular does not exclude the plural. The terms first, second, etc. are used for designations and do not represent any particular order.

It should be understood that the embodiments as shown in the drawings only show the optional shapes, sizes and arrangements of optional components of the air valve and inflatable products according to the present disclosure, which are merely illustrative but not restrictive, and other shapes, sizes and arrangements may be employed without departing from the idea and scope of the present disclosure.

## Claims

1. An inflatable product comprising:
a first wall (110);
a second wall (130) arranged opposite the first wall (110),;
an inflatable chamber (500) defined by the first wall (110) and the second wall (130); and
a plurality of tensioning assemblies (400) disposed within the inflatable chamber (500), each of the plurality of tensioning assemblies (400) comprising:
a tensioning member (410) comprising a woven fabric; and
a first connecting member (430) welded to the first wall (110) and sewn to the tensioning member (410), the first connecting member (430) comprising:
a first connecting strip (431) having a first surface (4311) facing the first wall (110) and a second surface (4313) facing the tensioning member (410);
a plurality of first strands (433), parallel to each other, disposed on the first surface (4311) of the first connecting strip (431), each of the plurality of first strands (433) comprising a plurality of first fibers (4331); and
a first high-polymer material (435) securing the plurality of first fibers (4331) to the first connecting strip (431).

2. The inflatable product according to claim 1, wherein the first high-polymer material (435) comprises a cross-linking agent that matches a material used to make the plurality of first fibers (4331).

3. The inflatable product according to claim 1, wherein the first high-polymer material (435) also covers a portion of the first surface (4311) of the first connecting strip (431), the portion being not covered by the plurality of first strands (433).

4. The inflatable product according to claim 1, wherein each of the plurality of tensioning members (410) comprises a plurality of first coated strands (4333), each first coated strand (4333) comprising a first strand (433) and the first high-polymer material (435), and the first high-polymer material (435) wrapping the plurality of first fibers (4331) of each first strand (433); and each of the first connecting members (430) also comprises a layer of a second high-polymer material (4373), the second high-polymer material (437) covering a portion of the first surface (4311) of the first connecting strip (431), the portion being not covered by the plurality of first coated strands (4333), and securing the plurality of first coated strands (4333) between the first surface (4311) of the first connecting strip (431) and the second high-polymer material (437).

5. The inflatable product according to claim 4, wherein the second high-polymer material (437) has the same composition as or a different composition than the first high-polymer material (435).

6. The inflatable product according to claim 1, wherein each of the first connecting members (430) comprises a plurality of first coated strands (4333), each first coated strand (4333) comprising a first strand (433) and the first high-polymer material (435), the first high-polymer material (435) wrapping the plurality of first fibers (4331) of each first strand (433); each of the first connecting members (430) further comprises:
a layer of a second high-polymer material (437); and
a layer of a third high-polymer material (439) located between the first coated strands (4333) and the first surface (4311) of the first connecting strip (431);
wherein the second high-polymer material (437) covers a portion of the third high-polymer material (439) not covered by the plurality of first coated strands (4333), and the plurality of first coated strands (4333) are sandwiched between the second high-polymer material (437) and the third high-polymer material (347).

7. The inflatable product according to claim 1, wherein each of the plurality of tensioning assemblies (400) further comprises:
a second connecting member (430) welded to the second wall (130) and sewn to the tensioning member (410), the second connecting member (430) comprising:
a second connecting strip (431) having a first surface (4311) facing the second wall (130) and a second surface (4313) facing the tensioning member (410);
a plurality of second strands (433), parallel to each other, disposed on the first surface (4311) of the second connecting strip (431), each second strand (433) comprising a plurality of second fibers (4331); and
a first high-polymer material (435) securing the plurality of strands (433) of second fibers (4331) to the second connecting strip (431).

8. The inflatable product according to claim 1 or 7, wherein the plurality of second fibers (4331) are twisted.

9. The inflatable product according to claim 7, wherein the first high-polymer material (435) further covers a portion of the first surface (4311) of the second connecting strip (431), the portion being not covered by the plurality of second strands (433).

10. The inflatable product according to claim 7, wherein each of the second connecting members (430) comprises a plurality of second coated strands (4333), each second coated strand (4333) comprising a second strand (433) and the first high-polymer material (435), and the first high-polymer material (435) wrapping the plurality of second fibers (4331) of each second strand (433); and
each of the second connecting members (430) further comprises a layer of a second high-polymer material (4373), the second high-polymer material (437) covering a portion of the first surface (4311) of the second connecting strip (431), the portion being not covered by the plurality of second coated strands (4333), and securing the plurality of second coated strands (4333) between the first surface (4311) of the second connecting strip (431) and the second high-polymer material (437).

11. The inflatable product according to claim 7, wherein each of the second connecting members (430) comprises a plurality of second coated strands (4333), each second coated strand comprising a second strand and the first high-polymer material (435), and the first high-polymer material (435) wrapping the plurality of strands of second fibers of each second strand;
each of the second connecting members (430) further comprises:
a layer of a second high-polymer material (4373); and
a layer of a third high-polymer material (4393) located between the second coated strands and the first surface of the second connecting strip;
wherein the second high-polymer material (437) covers a portion of the third high-polymer material (439) not covered by the plurality of second coated strands (4333), and the plurality of second coated strands are sandwiched between the second high-polymer material (437) and the third high-polymer material (439).

12. A method for manufacturing a tensioning assembly of an inflatable product according to one or more of claims 1 to 11, **characterized by** comprising the following steps:
preparing a tensioning member (410) comprising a woven fabric;
securing a plurality of strands (433) to a plurality of sheet materials by a first high-polymer material (435) to obtain a plurality of connecting sheets (420), each strand (433) comprising a plurality of fibers (4331), and the first high-polymer material (435) wrapping the plurality of fibers (4331) of each strand (433);
cutting each of the connecting sheets (420) to obtain a plurality of first connecting members (430) and a plurality of second connecting members (430), each of the first connecting members (430) comprising a first connecting strip (431), and each of the second connecting members (430) comprising a second connecting strip (431);
sewing the tensioning member (410) to at least one of the first connecting members (430), wherein the first connecting strip (431) is located between the plurality of first strands (433) and the tensioning member (410); and
sewing the tensioning member (410) to at least one of the second connecting members (430), wherein the second connecting strip (431) is located between the plurality of second strands (433) and the tensioning member (410).

13. The method for manufacturing a tensioning assembly according to the preceding claim, wherein the step of securing a plurality of strands (433) to a plurality of sheet materials by a first high-polymer material (435) to obtain a plurality of connecting sheets (420) comprises:
securing a plurality of strands (433) to each of a plurality of sheet materials by a first high-polymer material (435) to obtain a plurality of connecting sheets (420), each strand (433) comprising a plurality of fibers (4331), and the first high-polymer material (435) wrapping the plurality of fibers (4331) of each strand (433).

14. The method for manufacturing a tensioning assembly according to the preceding claim, wherein the step of securing a plurality of strands (433) to a plurality of sheet materials by a first high-polymer material (435) to obtain a plurality of connecting sheets (420) comprises:
heating one of the sheet materials to soften the sheet material;
placing a plurality of strands (433) on a first surface of the softened sheet material, each strand comprising a plurality of fibers;
pressing the plurality of strands and the first surface of the sheet material;
coating a first mixture on the first surface of the sheet material to allow the first mixture to penetrate between the plurality of fibers of each strand, and between the plurality of strands and the sheet material; and
heating the first mixture to cure the first mixture to produce a first high-polymer material (435).

15. The method for manufacturing a tensioning assembly according to claim 13, wherein the step of securing a plurality of strands to a plurality of sheet materials by a first high-polymer material (435) to obtain a plurality of connecting sheets comprises:
immersing a plurality of strands into a first mixture to allow the first mixture to penetrate between the plurality of fibers of each strand;
heating the first mixture to cure the first mixture to produce a first high-polymer material (435), thereby resulting in a plurality of coated strands;
heating a sheet material to soften the sheet material;
placing the plurality of coated strands on a first surface of the softened sheet material; and
pressing the plurality of coated strands and the first surface of the sheet material to bond the plurality of coated strands and the sheet material.

16. A method for manufacturing an inflatable product according to one or more of claims 1 to 11, the method comprising:
preparing a first wall (110) and a second wall (130) of an inflatable product;
manufacturing a tensioning assembly according to claims 12-15;
welding the first wall (110) to the first connecting member (430), wherein the plurality of first strands (433) are located between the first wall (110) and the first connecting strip (431); and
welding the second wall (130) to the second connecting member (430), wherein the plurality of second strands (433) are located between the second wall (130) and the second connecting strip (431).
